(19) **Europäisches Patentamt**
**European Patent Office**
**Office européen des brevets**

(11) **EP 4 494 999 A1**

(12) **EUROPEAN PATENT APPLICATION**
published in accordance with Art. 153(4) EPC

(43) Date of publication:
**22.01.2025 Bulletin 2025/04**

(21) Application number: **23770609.8**

(22) Date of filing: **09.03.2023**

(51) International Patent Classification (IPC):
*B63H 25/04* (2006.01)   *B63B 49/00* (2006.01)
*B63B 79/10* (2020.01)   *B63B 79/40* (2020.01)
*B63H 25/00* (2006.01)   *G01S 17/93* (2020.01)

(52) Cooperative Patent Classification (CPC):
**B63B 49/00; B63B 79/10; B63B 79/40;**
**B63H 25/00; B63H 25/04; G01S 17/93**

(86) International application number:
**PCT/JP2023/008958**

(87) International publication number:
**WO 2023/176653 (21.09.2023 Gazette 2023/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.03.2022 JP 2022040122**

(71) Applicants:
• **Pioneer Corporation**
**Tokyo 113-0021 (JP)**
• **Pioneer Smart Sensing Innovations Corporation**
**Tokyo 113-0021 (JP)**

(72) Inventors:
• **KATO, Masahiro**
**Kawagoe-shi, Saitama 350-8555 (JP)**
• **MATSUZAKI, Shin**
**Kawagoe-shi, Saitama 350-8555 (JP)**
• **KATO, Masahiro**
**Kawagoe-shi, Saitama 350-8555 (JP)**

(74) Representative: **Viering, Jentschura & Partner**
**mbB**
**Patent- und Rechtsanwälte**
**Am Brauhaus 8**
**01099 Dresden (DE)**

(54) **INFORMATION PROCESSING DEVICE, CONTROL METHOD, PROGRAM, AND STORAGE MEDIUM**

(57)    The controller 13 of the information processing device 1 functions as an acquisition unit, an extraction unit, and a straight line calculation unit. The acquisition unit acquires point cloud data, which is a set of data generated by a lidar 3 provided in a target ship, identified by a pair of a horizontal number being an index representing a position in a horizontal direction, and a vertical number being an index representing a position in a vertical direction. The extraction unit extracts, for each horizontal number, i.e., for each vertical line, the data representing a nearest neighbor point nearest to the target ship among data representing measured points of a berthing place. The straight line calculation unit calculates a berthing side straight line Ls alongside the berthing place, based on a neighbor point set, which is a set of data representing the nearest neighbor point.

FIG. 5A

VERTICAL
LINE

● NEAREST NEIGHBOR POINT

FIG. 5B

Ls

NEIGHBOR POINT
SET

**Description**

TECHNICAL FIELD

The present disclosure relates to a process in berthing a ship at a shore.

BACKGROUND

Conventionally, there is known a technique for supporting berthing (getting ashore) a ship at a wharf. For example, Patent Literature 1 discloses an autonomous berthing device configured to autonomously control a ship to berth at a shore (wharf), wherein the autonomous berthing device controls the posture of the ship so that a lidar can receive a light emitted by the lidar and reflected by an object in the vicinity of the berthing place.

PRIOR ART DOCUMENTS

PATENT LITERATURE

Patent Literature 1: JP 2020-59403A

SUMMARY

PROBLEM TO BE SOLVED BY THE INVENTION

It is important to berth a ship safely and smoothly at a berthing place, and it is especially desired to realize a berthing support system for ship operation support and autonomous ship operation. Therefore, it is necessary to accurately calculate the parameters such as the distance, speed, and angle with respect to a berthing place. Then, in calculating these parameters, it is required to accurately calculate the straight line along the side surface of the berthing place.

The present disclosure has been made in order to solve the above issue, and it is an object of the present invention to provide an information processing device capable of accurately calculating a straight line along the side surface of a berthing place.

MEANS FOR SOLVING THE PROBLEM

One invention is an information processing device including:

an acquisition unit configured to acquire measurement data which is a set of data generated by a measurement device provided in a ship, the data being identified by a pair of an index representing a position in a horizontal direction and an index representing a position in a vertical direction;
an extraction unit configured to extract, for each index representing the position in the horizontal direction, the data representing a nearest neighbor point nearest to the ship among the data representing measured points of a berthing place; and
a straight line calculation unit configured to calculate a straight line along the berthing place, based on a neighbor point set which is a set of the data representing the nearest neighbor point.

Another invention is a control method executed by a computer, the control method including:

acquiring measurement data which is a set of data generated by a measurement device provided in a ship, the data being identified by a pair of an index representing a position in a horizontal direction and an index representing a position in a vertical direction;
extracting, for each index representing the position in the horizontal direction, the data representing a nearest neighbor point nearest to the ship among the data representing measured points of a berthing place; and
calculating a straight line along the berthing place, based on a neighbor point set which is a set of the data representing the nearest neighbor point.

Still another invention is a program causing a computer to:

acquire measurement data which is a set of data generated by a measurement device provided in a ship, the data being identified by a pair of an index representing a position in a horizontal direction and an index representing a position in a vertical direction;

extract, for each index representing the position in the horizontal direction, the data representing a nearest neighbor point nearest to the ship among the data representing measured points of a berthing place; and

calculate a straight line along the berthing place, based on a neighbor point set which is a set of the data representing the nearest neighbor point.

BRIEF DESCRIPTION OF THE DRAWINGS

[FIGS. 1A to 1C] FIGS. 1A to 1C schematically illustrate an operation support system.

[FIG. 2] It is a block diagram showing a hardware configuration of an information processing device.

[FIG. 3] It is a functional block diagram relating to the berthing support process.

[FIGS. 4A to 4C] FIG. 4A illustrates an example of the hull coordinate system with respect to the hull of a target ship.

FIG. 4B illustrates the lidar capturing the wharf to come alongside.

FIG. 4C illustrates a perspective view of a structural object with a clear indication of the normal vector.

[FIGS. 5A and 5B] FIG. 5A is a perspective view of a wharf, which is a berthing place measured by the lidar, with a clear indication of measured points of the wharf and the nearest neighbor point for each vertical line.

FIG. 5B is a perspective view of the wharf with a clear indication of a berthing side straight line generated from the nearest neighbor points.

[FIGS. 6A and 6B] FIG. 6A illustrates the berthing side straight line Ls obtained when the obtained point cloud data is only the measured points on the side surface of the berthing place.

FIG. 6B illustrates the berthing side straight line Ls obtained when the obtained point cloud data is only the measured points on the upper surface of the berthing place.

[FIGS. 7A and 7B] FIG. 7A indicates the berthing side straight line before the update.

FIG. 7B indicates the berthing side straight line after the update.

[FIG. 8] It illustrates a frame of point cloud data on a virtual plane facing the lidar.

[FIGS. 9A and 9B] FIG. 9A illustrates a front view of the target ship in the case where the measurement range of the lidar ranges from the upper surface to the side surface of the berthing place.

FIG. 9B illustrates a perspective view of the berthing place with a clear indication of the measurement range and the nearest neighbor points for respective vertical lines in such a condition that the measurement range of the lidar ranges from the upper surface to the side surface of the berthing place and there is a vertical line on which the measurement range includes only the upper surface.

[FIGS. 10A to 10C] FIG. 10A illustrates a top view of the target ship and the berthing place with a clear indication of the nearest neighbor points for respective vertical lines and the berthing side straight line generated therefrom in such a condition that the measurement range of the lidar ranges from the upper surface to the side surface of the berthing place and there is a vertical line on which the measurement range includes only the upper surface.

FIG. 10B illustrates a top view of the target ship and the berthing place with a clear indication of the selected nearest neighbor points and the berthing side straight line generated therefrom in such a condition that the measurement range of the lidar ranges from the upper surface to the side surface of the berthing place and there is a vertical line on which the measurement range includes only the upper surface.

FIG. 10C illustrates a front view of the target ship when the berthing place is a pier having a thin upper surface and a hard-to-detect side surface

[FIG. 11] It illustrates a frame of the point cloud data on a virtual plane facing the lidar.

[FIGS. 12A and 12B] FIG. 12A illustrates a front view of the target ship in the case where the measurement range of the lidar ranges from the upper surface to the side surface of the wharf to come alongside where the side is inclined inward.

FIG. 12B illustrates a perspective view of the berthing place with a clear indication of the measurement range of the lidar and the nearest neighbor points for respective vertical lines in such a condition that the measurement range of the lidar ranges from the upper surface to the side surface of the berthing place and there is a vertical line on which the measurement range includes only the side surface.

[FIGS. 13A and 13B] FIG. 13A illustrates a top view of the target ship and the berthing place with a clear indication of the nearest neighbor points for respective vertical lines and the berthing side straight line generated therefrom in such a condition that the measurement range of the lidar ranges from the upper surface to the side surface of the berthing place and there is a vertical line on which the measurement range includes only the side surface.

FIG. 13B illustrates a top view of the target ship and the berthing place with a clear indication of the nearest neighbor points subjected to decrease in the weights and the berthing side straight line generated therefrom in such a condition that the measurement range of the lidar ranges from the upper surface to the side surface of the berthing place and there is a vertical line on which the measurement range includes only the side surface.

[FIG. 14] It illustrates an example of the data structure of the reliability information.
[FIG. 15] It is an example of a flowchart showing an outline of the berthing support process.
[FIG. 16] It is a bird's-eye view of the target ship with a clear indication of the contour points.
[FIG. 17] It illustrates arrows indicative of the distance from the contour points to the berthing side straight line.
[FIG. 18] It illustrates a neighboring portion and the shortest distance.
[FIG. 19] It is an example of a flowchart of the berthing side straight line generation process.
[FIG. 20] It indicates the indicators and the degree of reliability included in the reliability information according to a modification.
[FIG. 21] It is a bird's-eye view of the target ship and berthing place with a clear indication of the indicators shown in FIG. 19.

## DETAILED DESCRIPTION OF PREFERRED EMBODIMENTS

According to a preferred embodiment of the present invention, there is provided an information processing device including: an acquisition unit configured to acquire measurement data which is a set of data generated by a measurement device provided in a ship, the data being identified by a pair of an index representing a position in a horizontal direction and an index representing a position in a vertical direction; an extraction unit configured to extract, for each index representing the position in the horizontal direction, the data representing a nearest neighbor point nearest to the ship among the data representing measured points of a berthing place; and a straight line calculation unit configured to calculate a straight line along the berthing place, based on a neighbor point set which is a set of the data representing the nearest neighbor point. According to this embodiment, the information processing device can suitably calculate the straight line along the berthing place.

In one aspect of the information processing device, the straight line calculation unit is configured to update the straight line, based on the neighbor point set after exclusion of the nearest neighbor point which is far in terms of distance from the straight line by a predetermined distance or more. According to this aspect, the information processing device accurately calculate the straight line along the berthing place, based on the neighbor point set after exclusion of the nearest neighbor points regarded as noise.

In another aspect of the information processing device, the straight line calculation unit is configured to calculate the straight line, based on the neighbor point set after exclusion of the data corresponding to the index having a largest depression angle of a measurement direction of the measurement device among indices which represent the positions in the vertical direction. According to this aspect, even when the measurement range of the measurement device covers both the upper surface and the side surface, the information processing device can accurately calculate the straight line along the berthing place.

In still another aspect of the information processing device, the straight line calculation unit is configured to calculate the straight line while setting a lower weight for the data of the neighbor point set corresponding to the index, which has a largest elevation angle of a measurement direction of the measurement device among indices which represent the positions in the vertical direction, than a weight for the other data in the neighbor point set. According to this aspect, when the measurement range of the measurement device covers the upper surface and the side surface and the side surface of the berthing place is inclined inward, the information processing device can accurately calculate the straight line along the berthing place.

In still another aspect of the information processing device, the information processing device further includes a quay distance calculation unit configured to calculate a quay distance which is a distance between the ship and the berthing place, based on a length of a perpendicular line from the measurement device to the straight line. According to this aspect, the information processing device can accurately calculate the quay distance, which is an important parameter to be used as a reference in berthing the ship at the berthing place.

In still another aspect of the information processing device, the information processing device further includes: a shortest quay distance calculation unit configured to extract a contour point, which has a shortest length of a perpendicular line from the contour point to the straight line, among contour points of the ship and calculate a shortest distance from a hull of the ship to the berthing place; and a proximate portion identification unit configured to identify a part of the ship closest to the berthing place. With this aspect, the information processing device makes it possible to suitably calculate the shortest distance from the hull of the ship to the berthing place.

In still another aspect of the information processing device, the acquisition unit is configured to acquire, as the measurement data, data obtained by performing at least one of removal of water surface reflection data and/or reduction of a data point number by down-sampling, the water surface reflection data being generated through reflection of light emitted by the measurement device at a water surface. According to this aspect, the information processing device can acquire measurement data after removal of noise or adjustment to suppress excessive data amount and calculate the quay distance.

According to another preferred embodiment of the present invention, there is provided a control method executed by a computer, the control method including: acquiring measurement data which is a set of data generated by a measurement device provided in a ship, the data being identified by a pair of an index representing a position in a horizontal direction and an index representing a position in a vertical direction; extracting, for each index representing the position in the horizontal direction, the data representing a nearest neighbor point nearest to the ship among the data representing measured points of a berthing place; and calculating a straight line along the berthing place, based on a neighbor point set which is a set of the data representing the nearest neighbor point. By executing this program, the computer can suitably calculate the straight line along the berthing place.

According to still another preferred embodiment of the present invention, there is provided a program causing a computer to: acquire measurement data which is a set of data generated by a measurement device provided in a ship, the data being identified by a pair of an index representing a position in a horizontal direction and an index representing a position in a vertical direction; extract, for each index representing the position in the horizontal direction, the data representing a nearest neighbor point nearest to the ship among the data representing measured points of a berthing place; and calculate a straight line along the berthing place, based on a neighbor point set which is a set of the data representing the nearest neighbor point. By executing this program, the computer can suitably calculate the straight line along the berthing place. In some embodiments, the program is stored in a storage medium.

EMBODIMENTS

Hereinafter, preferred embodiments of the present invention are described below with reference to drawings.

(1) Overview of Driving Support System

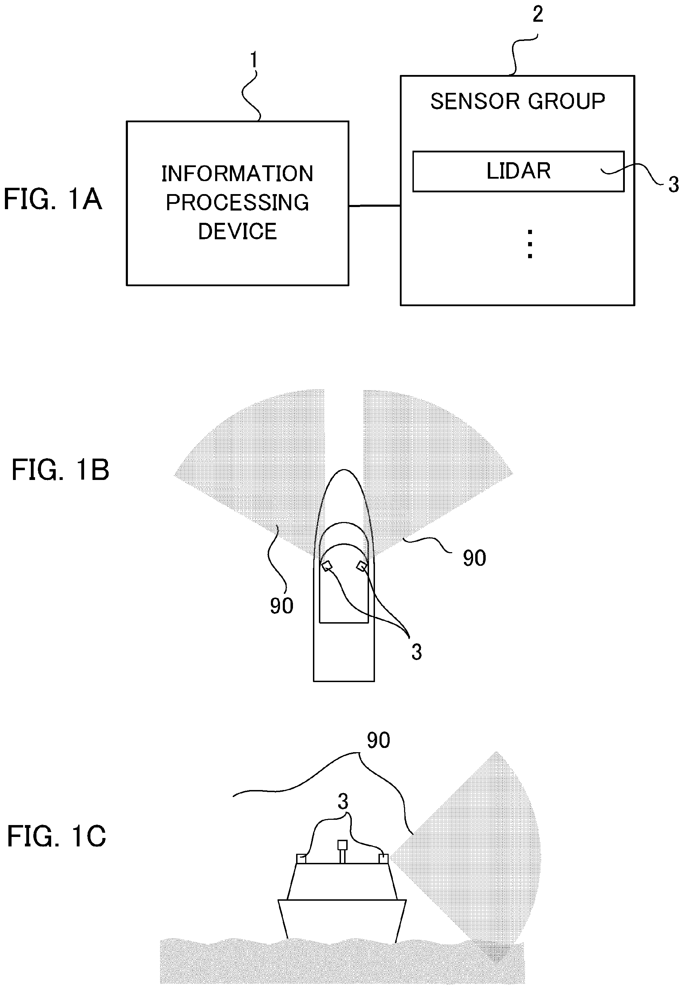

FIG. 1A to FIG. 1C are schematic configurations of an operation support system according to the present embodiment. Specifically, FIG. 1A shows a block configuration diagram of the operation support system, FIG. 1B is a top view illustrating the ship included in the operation support system and a field of view (also referred to as "measurement range" or "measurable range of distance") 90 of the lidar 3 to be described later, and FIG. 1C is a rear view of a ship and the field of view 90 of the lidar 3. The operation support system includes an information processing device 1 which moves together with the ship that is a moving body, and a sensor group 2 mounted on the ship. Hereafter, the ship equipped with the operation support system is also referred to as the "target ship".

The information processing device 1 is electrically connected to the sensor group 2 and supports the operation of the target ship based on the outputs from various sensors included in the sensor group 2. The ship operation support includes a berthing support such as automatic berthing. Here, "berthing" includes not only driving the target ship to come alongside a wharf but also driving the target ship to come alongside a structural object such as a pier. In the following, the term "berthing place" shall mean a generic term for any structural object subjected to berthing such as a wharf and a pier. The information processing device 1 may be a navigation device provided on a ship or an electronic control device built in a ship.

The sensor group 2 includes various external and internal sensors provided on the ship. For example, the sensor group 2 in the present embodiment include the lidar (Lidar: Light Detection and Ranging, or Laser Illuminated Detection And Ranging) 3.

The lidar 3 is an external sensor configured to emit pulse lasers within a predetermined angle range in the horizontal direction (see FIG. 1B) and in the vertical direction (see FIG. 1C) and thereby discretely measures the distance to an object existing in the external space and generates three dimensional point cloud data indicative of the position of the object. In the example shown in FIG. 1B and FIG. 1C, as the lidar 3, there are provided in the ship a lidar directed to the left side direction of the ship and a lidar directed to the right side direction of the ship, respectively. The arrangement of the lidar 3 is not limited to the example shown in FIG. 1B and FIG. 1C. For example, the target ship may be equipped with plural lidars 3 (e.g., lidars provided at front and rear of the target ship) for measuring the same side direction. Further, the number of the lidars 3 installed in the object ship is not limited to two and may be one or may be three or more.

The lidar 3 is equipped with a radiation unit for radiating a laser beam while changing the irradiation direction, a light receiving unit for receiving the reflected light (scattered light) of the radiated laser beam, and an output unit for outputting data based on the received light signal outputted by the light receiving unit. Each data measured for each irradiation direction of the pulsed laser is generated based on the irradiation direction corresponding to the laser beam received by the light receiving unit and the response delay time of the laser beam which is identified by the received light signal described above. Hereafter, a point, or its measurement data, measured through irradiation with the laser beam within the measurement range of the lidar 3 is also referred to as "measured point".

The point cloud information can be regarded as an image, wherein each pixel of the image corresponds to each measurement direction and the pixel value of the each pixel is set as the measurement distance and the reflection intensity value in the each measurement direction. In this case, pixels arranged in the vertical direction correspond to different emitting directions of the laser light in the elevation / depression angle and pixels arranged in the horizontal direction correspond to different emitting directions of the laser light in the horizontal angle. Hereafter, provided that the point cloud data is regarded as an image, the measured points corresponding to a sequence of pixels (i.e., a column) having the same positional index in the horizontal direction is also referred to as "vertical line". In addition, provided that the point cloud data is regarded as an image, the positional index in the horizontal direction is referred to as "horizontal number", and the positional index in the vertical direction is referred to as "vertical number".

It is noted that the lidar 3 is not limited to the above-described scan type lidar and may be a flash type lidar for generating three-dimensional data by diffusing and radiating laser beams into the field of view of a two-dimensional array sensor. The lidar 3 is an example of the "measurement device" in the present invention.

(2) Configuration of Information Processing Device

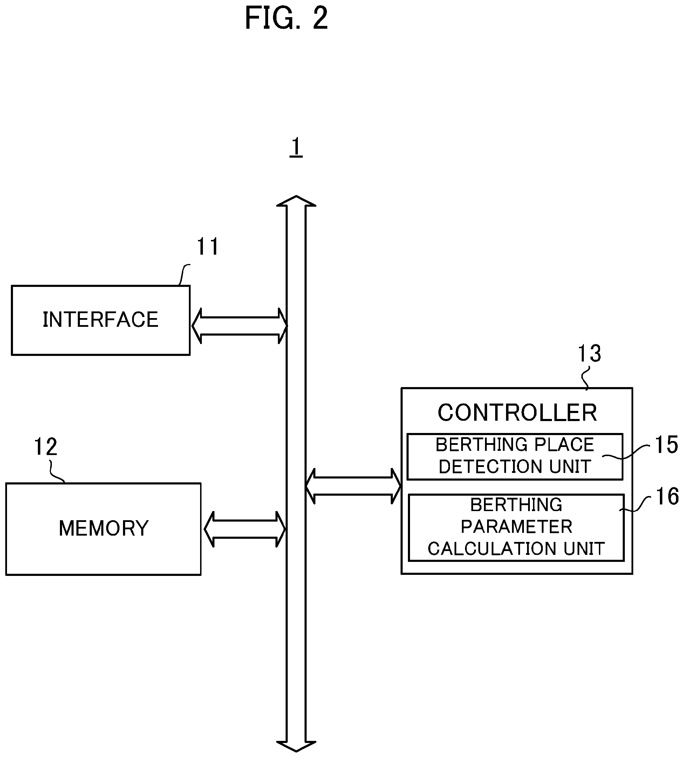

FIG. 2 is a block diagram illustrating an example of a hardware configuration of the information processing device 1. The information processing device 1 mainly includes an interface 11, a memory 12, and a controller 13. Each of these elements is connected to each other through a bus line.

The interface 11 performs the interface operation related to the transfer of data between the information processing device 1 and an external device. In the present embodiment, the interface 11 acquires and supplies output data from each sensor of the sensor group 2 to the controllers 13. For example, the interface 11 also supplies signals relating to the control of the target ship generated by the controller 13 to each component of the target ship to control the operation of the target ship. For example, the target ship includes a driving source such as an engine or an electric motor, a screw for generating a propulsive force in the traveling direction based on the driving force from the driving source, a thruster for generating a lateral propulsive force based on the driving force from the driving source, and a rudder which is a mechanism for controlling the traveling direction of the target ship. Then, during an autonomous driving operation such as autonomous berthing, the interface 11 supplies a control signal generated by the controller 13 to each of these components. In the case where an electronic control device is provided in the target ship, the interface 11 supplies a control signal generated by the controller 13 to the electronic control device. Examples of the interface 11 include a wireless interface, such as a network adapter, for performing wireless communication, and a hardware interface, such as a cable, for connecting to an external device. The interface 11 may also perform interface operations with various peripheral devices such as an input device, a display device, and a sound output device.

The memory 12 is configured by various volatile and non-volatile memories such as a RAM (Random Access Memory), a ROM (Read Only Memory), a hard disk drive, and a flash memory. The memory 12 stores a program for the controller 13 to perform a predetermined process. The program executed by the controller 13 may be stored in a storage medium other than the memory 12.

In addition, the memory 12 stores information necessary for processing to be performed by the information processing device 1 in the present embodiment. For example, the memory 12 may store map data including information regarding the position of the berthing place. In another example, the memory 12 stores information regarding the size of the down-sampling if the down-sampling is applied to the point cloud data which is obtained during every cycle of the scanning by the lidar 3.

The controller 13 includes one or more processors, such as a CPU (Central Processing Unit), a GPU (Graphics Processing Unit), and a TPU (Tensor Processing Unit), and controls the entire information processing device 1. In this case, by executing a program stored in the memory 12 or the like, the controller 13 performs processing related to the operation support or the like of the target ship.

The controller 13 functionally includes a berthing place detection unit 15 and a berthing parameter calculation unit 16. The berthing place detection unit 15 performs processing related to the detection of the berthing place based on the point cloud data outputted by the lidar 3. The berthing parameter calculation unit 16 calculates parameters (also referred to as "berthing parameters") necessary for berthing the target ship at the berthing place. Here, the berthing parameters include the distance (the quay distance) from the target ship to the berthing place, the approach angle of the target ship to the berthing place, and the speed (docking speed) at which the target ship approaches the docking place. Further, on the basis of the processing result from the berthing place detection unit 15 and the berthing parameters, the berthing parameter calculation unit 16 calculates information (also referred to as "reliability information") representing the degree of reliability regarding berthing to the berthing place. The controller 13 functions as an "acquisition unit", an "extraction unit", a "straight line calculation unit", a "quay distance calculation unit", and a computer configured to execute the program.

The controller 13 is not limited to be implemented by software using a program, it may be implemented by any combination of hardware, firmware, software and/or the like. The controller 13 may also be a user-programmable integrated circuit, such as a FPGA (Field-Programmable Gate Array) and a microcontroller, an ASSP (Application Specific Standard Produce) and an ASIC (Application Specific Integrated Circuit). In this case, the program executed by the controller 13 according to the embodiment may be implemented by using the above-mentioned integrated circuit.

(3) Outline of Berthing Support Process

Next, an outline of the berthing support process executed by the information processing device 1 will be described. Based on the point cloud data measured by the lidar 3 in the direction in which the berthing place is present, the information processing device 1 generates a straight line (also referred to as "berthing side straight line Ls") along the side surface of the berthing place. Then, based on the berthing side straight line Ls, the information processing device 1 calculates the berthing parameters such as the quay distance.

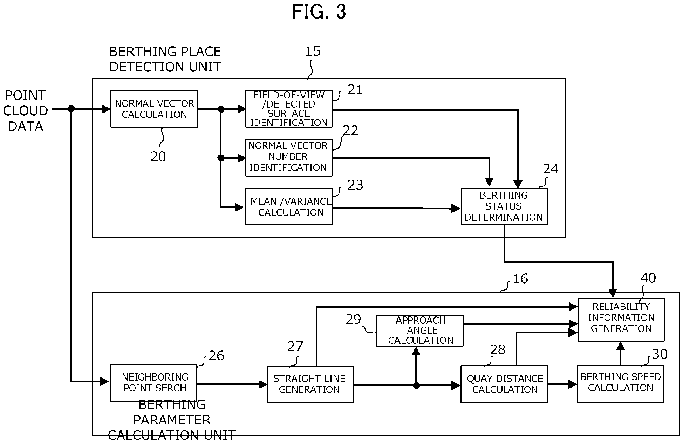

FIG. 3 is a functional block diagram of the berthing place detection unit 15 and the berthing parameter calculation unit 16 relating to the berthing support process. The berthing place detection unit 15 functionally includes a normal vector calculation block 20, a field-of-view / detected surface identification block 21, a normal vector number identification block 22, a mean / variance calculation block 23, and a berthing status determination block 24. The berthing parameter calculation unit 16 functionally includes a neighbor point search block 26, a straight line generation block 27, a quay distance calculation block 28, an approach angle calculation block 29, a berthing speed calculation block 30, and a reliability information generation block 40.

On the basis of the point cloud data generated by the lidar 3 in the direction in which the berthing place exists, the normal vector calculation block 20 calculates a normal vector of a plane (also referred to as "berthing plane") formed by the berthing place. In this case, for example, the normal vector calculation block 20 calculates the normal vector based on the point cloud data generated by the lidar 3, which includes the berthing side from the the target ship in the measurement range. Information on the measurement range of the lidar 3 and the direction of the berthing place may be registered in advance in the memory 12, for example.

In this case, in some embodiments, the normal vector calculation block 20 may apply a down sampling to the point cloud data and remove the data (also referred to as "water surface reflection data") generated through the reflection of the laser beam at the water surface.

In this case, first, among the point cloud data generated by the lidar 3, the normal vector calculation block 20 identifies data indicating the position below the water surface position as the water surface reflection data (i.e., erroneous detection data) and removes the data from the point cloud data. For example, the normal vector calculation block 20 estimates the water surface position based on the mean value in the height direction of the point cloud data generated by the lidar 3 in such a condition that there is no object other than the water surface in the vicinity. Then, the normal vector calculation block 20 applies a down-sampling, which is a process of integrating the measured points for each grid space with a predetermined size, to the point cloud data after removing the water surface reflection data. Then, with respect to each measured point indicated by the point cloud data after the down-sampling, the normal vector calculation block 20 calculates the normal vector using a plurality of measured points in the vicinity of the each measured point. In some embodiments, the down-sampling may be performed before removal of data reflected at the water surface.

The field-of-view / detected surface identification block 21 identifies the surface (also referred to as "surface in the field of view") of the berthing place existing within the field of view of the lidar 3 and the surface (also referred to as "detected surface") of the berthing place detected based on the normal vectors calculated by the normal vector calculation block 20. In this case, the field-of-view / detected surface identification block 21 identifies whether or not the surface in the field of view and the detected surface each includes the upper surface and/or the side surface of the berthing place.

The normal vector number identification block 22 extracts, from the normal vectors calculated by the normal vector calculation block 20, the normal vector(s) in the vertical direction and the normal vector(s) in the direction (i.e., the horizontal direction) perpendicular thereto. Then, the normal vector number identification block 22 counts the number of the normal vectors in the vertical direction and the number of the normal vectors in the horizontal direction. Here, the normal vector number identification block 22 identifies the normal vectors in the vertical direction as the normal vectors of measured points on the upper surface of the berthing place and identifies the normal vectors in the horizontal direction as the normal vectors of measure points on the side surface of the berthing place and uses the above-mentioned numbers of the normal vectors as an indicator of the reliability regarding the berthing place.

The mean / variance calculation block 23 extracts, from the normal vectors calculated by the normal vector calculation block 20, the normal vector(s) in the vertical direction and the normal vector(s) in the vertical direction (i.e., the horizontal direction), and calculates the mean and variance of the normal vectors in the vertical direction and the mean and variance of the normal vectors in the horizontal direction.

The berthing status determination block 24 acquires the processing results, which are identified or calculated based on the same point cloud data, from the field-of-view / detected surface identification block 21, the normal vector number identification block 22, and the mean / variance calculation block 23, as the determination results representing the detection status of the berthing place in generating the point cloud data. The berthing state determination block 24 supplies the processing results from the field-of-view / detected surface identification block 21, the normal vector number identification block 22, and the mean / variance calculation block 23 to the berthing parameter calculation unit 16 as the determination results of the detection status of the berthing place.

The neighbor point search block 26 performs a process of searching the measured points constituting the point cloud data for the nearest neighbor point to the target ship for each vertical line.

On the basis of the nearest neighbor points determined by the neighbor point search block 26, the straight line generation block 27 generates a berthing side straight line Ls (in detail an equation representing the straight line), which is a straight line along the side surface of the berthing place. On the basis of the berthing side straight line Ls generated by the straight line generation block 27, the quay distance calculation block 28 calculates the quay distance corresponding to the shortest distance between the target ship and the berthing place. If there are a plurality of lidars 3 capable of measuring the berthing place, the quay distance calculation block 28 integrates the point cloud data generated by the plurality of lidars 3 and then generates the berthing side straight line Ls based on the integrated point cloud data to calculate the shortest distance with respect to each lidar 3 as the quay distance. Instead, it may generate each berthing side straight line Ls for the point cloud data generated by each lidar 3 to thereby calculate the shortest distance between the each berthing side straight line Ls and the each lidar 3 as the quay distance. In another example, it may calculate the shortest distance from a reference point, such as the center position of the ship, to the berthing side straight line Ls as the quay distance. Instead of using the shortest distance for each lidar 3 as the quay distance, the quay distance calculation block 28 may use the shortest distance among the shortest distances for respective lidars 3 as the quay distance, or may use the mean of these shortest distances as the quay distance.

Based on the berthing side straight line Ls generated by the straight line generation block 27, the approach angle calculation block 29 calculates the angle of approach of the target ship with respect to the berthing place. Specifically, the approach angle calculation block 29 calculates the approach angle using "atan2", which is a function to obtain the arctangent from two arguments defining the tangent. More specifically, the approach angle calculation block 29 calculates the approach angle by calculating the function "atan2" from the directional vector in the berthing side straight line Ls.

The berthing speed calculation block 30 calculates the berthing speed, which is the speed of the target ship in approaching the berthing place, based on the quay distance calculated by the quay distance calculation block 28. For example, the berthing speed calculation block 30 calculates the time rate of change in the quay distance (the shortest distance) as the berthing speed.

The reliability information generation block 40 generates the reliability information on the basis of the processing results from the berthing state determination block 24, the straight line generation block 27, the quay distance calculation block 28, and the approach angle calculation block 29. Details of the reliability information will be described later.

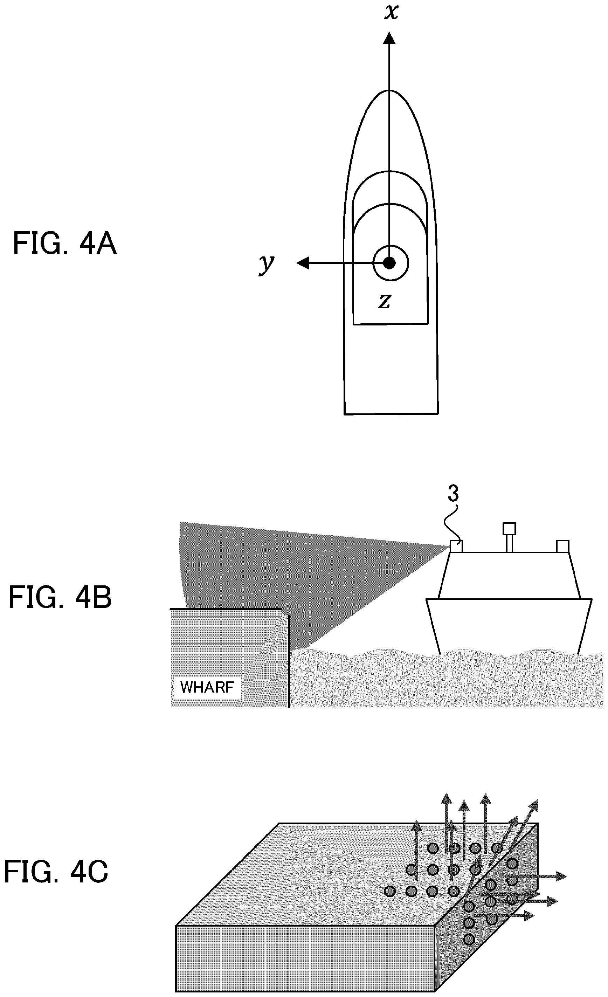

Next, a specific example of the process executed by the normal vector calculation block 20, the normal vector number identification block 22, and the mean / variance calculation block 23 will be described with reference to FIGS. 4A to 4C.

FIG. 4A shows an example of a hull coordinate system with respect to the hull of the target ship. As shown in FIG. 4A, hereinafter, the front (forward) direction of the target ship is set as the "x" coordinate, the side direction of the target ship is set as the "y" coordinate, and the height direction of the target ship is set as the "z" coordinate. Then, the measurement data, which is measured by the lidar 3, having the coordinate system with respect to the lidar 3 is converted into data in the hull coordinate system shown in FIG. 4A. The process of converting the point cloud data having the coordinate system with respect to the lidar installed in the moving body into data in the coordinate system with respect to the moving body is disclosed in PCT International Publication WO2019/188745, for example.

FIG. 4B shows the lidar 3 capturing a wharf, which is a berthing place. FIG. 4C is a perspective view of the berthing place (wharf, in this case) with a clear indication of measured points, which represent measured positions of the wharf that is a berthing place measured by the lidar 3, and normal vectors calculated on the basis of the measured points. In FIG. 4C, each measured point is indicated by a circle, and each normal vector is indicated by an arrow. Here, an example in which both the upper surface and the side surface of the wharf were measured by the lidar 3 is shown.

As shown in FIG. 4C, the normal vector calculation block 20 calculates the normal vectors for respective measured points on the side surface and the upper surface of the wharf. Since the normal vector is a vector perpendicular to the plane or curved plane of interest, it is calculated using a plurality of measured points configurable as a plane. Therefore, a grid with predetermined vertical and horizontal lengths or a circle with a predetermined length of radius is set and the normal vector is calculated using measured points existing within the grid or the circle. In this case, the normal vector calculation block 20 may calculate the normal vector for each measured point or, may calculate the normal vector at an interval of a predetermined distance. Then, the normal vector number identification block 22 identifies a normal vector whose z component is larger than a predetermined threshold value as a normal vector oriented in the vertical direction. The normal vector is assumed to be converted into a unit vector. In contrast, the normal vector number identification block 22 identifies a normal vector whose z component is less than a predetermined threshold value as a normal vector oriented in the horizontal direction. The normal vector number identification block 22 counts the number (five in this case) of normal vectors oriented in the vertical direction and the number (four in this case) of the normal vector oriented in the horizontal direction. Furthermore, the mean / variance calculation block 23 calculates the mean and variance of the normal vectors oriented in the vertical direction and the mean and variance of the normal vectors oriented in the horizontal direction. It is noted that the normal vectors around the edge are oriented in diagonal direction since the measured points in the vicinity are on the side surface or the upper surface.

(4) Details of Method of Generating Berthing Side Straight Line

Next, a description will be given of the methods (first generation method, second generation method, and third generation method) of generating the berthing side straight line Ls.

(4-1) First Generation Method

In the first generation method, the berthing parameter calculation unit 16 applies the nearest neighbor search, for each vertical line, to a frame of point cloud data, and generates a neighbor point set, which is a set of points on or near the edge (in detail, the boundary of the upper surface and the side surface) of the berthing place. Then, the berthing parameter calculation unit 16 calculates the berthing side straight line Ls by applying the principal component analysis to the neighbor point set to obtain the vector of the principal component axis having the largest eigenvalue.

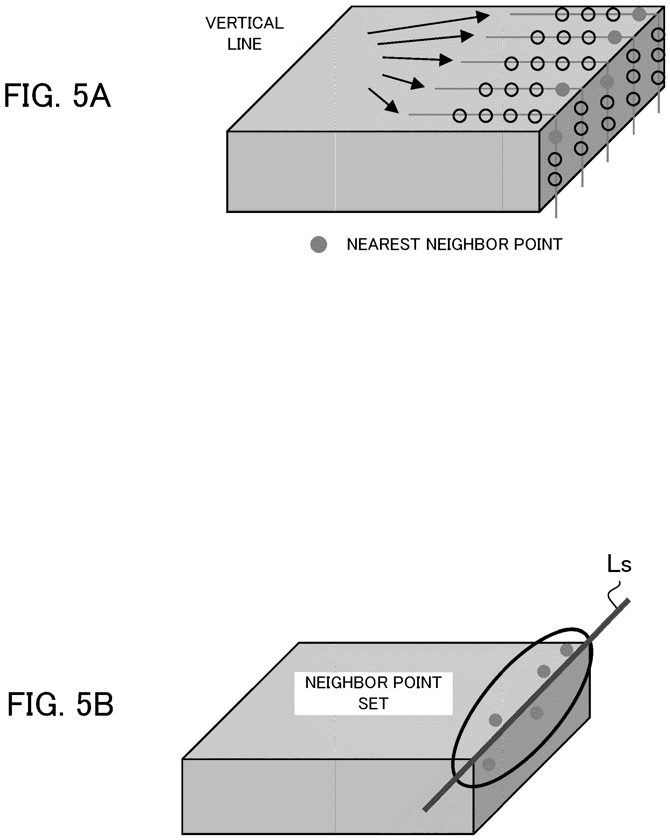

FIG. 5A is a perspective view of a wharf, which is a berthing place measured by the lidar 3, with a clear indication of measured points of the wharf and the nearest neighbor point for each vertical line. FIG. 5B is a perspective view of the wharf with a clear indication of a berthing side straight line Ls generated from the nearest neighbor points.

As illustrated in FIG. 5A, the berthing parameter calculation unit 16 applies the nearest neighbor search, for each vertical line, to a frame of point cloud data and determines the nearest neighbor point for each vertical line. Then, as illustrated in FIG. 5B, the berthing parameter calculation unit 16 identifies a set of the nearest neighbor points determined for respective vertical lines as the neighbor point set and applies the principal component analysis to the neighbor point set. Then, the berthing parameter calculation unit 16 calculates the vector of the principal component axis having the largest eigenvalue as the berthing side straight line Ls.

Specifically, from the acquired n nearest neighbor points "$p_i = [x_i\ y_i\ z_i]^T$" for respective vertical lines, the indirect parameter calculation unit 16 acquires the mean vector "$\mu$" representing the center of gravity of the neighbor point set shown in the following equation (1).

[Math Expression 1]

$$\boldsymbol{\mu} = [\mu_x \quad \mu_y \quad \mu_z]^T = \left[\frac{1}{n}\sum_{i=1}^{n} x_i \quad \frac{1}{n}\sum_{i=1}^{n} y_i \quad \frac{1}{n}\sum_{i=1}^{n} z_i\right]^T \qquad (1)$$

Then, the berthing parameter calculation unit 16 calculates the covariance matrix C shown in the following equation (2) using these nearest neighbor point $p_i$ and the mean vector $\mu$.

[Math Expression 2]

$$\boldsymbol{C} = \frac{1}{n-1}\sum_{i=1}^{n}\left(\begin{bmatrix}x_i - \mu_x\\y_i - \mu_y\\z_i - \mu_z\end{bmatrix}\begin{bmatrix}x_i - \mu_x\\y_i - \mu_y\\z_i - \mu_z\end{bmatrix}^T\right) = \begin{bmatrix}\sigma_x^2 & \sigma_{xy} & \sigma_{xz}\\\sigma_{xy} & \sigma_y^2 & \sigma_{yz}\\\sigma_{xz} & \sigma_{yz} & \sigma_z^2\end{bmatrix} \qquad (2)$$

Using the eigenvalue "$\lambda$" and eigenvector "$v$" of this covariance matrix C, the following equation (3) is obtained.
[Math Expression 3]

$$\boldsymbol{Cv} = \lambda\boldsymbol{v} \qquad (3)$$

Accordingly, the berthing parameter calculation unit 16 obtains the eigenvalue by solving the characteristic equation shown in the following equation (4) and calculates the eigenvector from the eigenvalue.
[Math Expression 4]

$$|\boldsymbol{C} - \lambda\boldsymbol{I}| = 0 \qquad (4)$$

Given the eigenvalues, which are the three solutions of the equation, are denoted by "$\lambda_1$", "$\lambda_2$", "$\lambda_3$" in descending order, the eigenvector v obtained by substituting the eigenvalue $\lambda_1$ into the equation (3) becomes the directional vector "u" of the berthing side straight line Ls. Then, the berthing parameter calculation unit 16 calculates the berthing side straight line Ls as shown in the following equation (5) using the directional vector u, the mean vector $\mu$, and the mediation variable "t".
[Math Expression 5]

$$Ls = \mu + t\,u \qquad (5)$$

In some embodiments, the berthing parameter calculation unit 16 may perform the updating process of the berthing side straight line Ls. In this case, the berthing parameter calculation unit 16 first determines the distance between each nearest neighbor point and the generated berthing side straight line Ls for each vertical line, since the generated berthing side straight line Ls could be influenced by the noise, which is not data on the wharf, contained in the neighbor point set. Then, if the largest distance among the calculated distances is equal to or more than a predetermined distance, the berthing parameter calculation unit 16 determines that the nearest neighbor point corresponding to the largest distance is a noise point, which is not identical to the data on the wharf, and then excludes the above-mentioned nearest neighbor point from the neighbor point set. Thereafter, the berthing parameter calculation unit 16 applies the principal component analysis to the neighbor point set after the exclusion, thereby updating the berthing side straight line Ls. Then, if the largest distance to the berthing side straight line Ls becomes less than the predetermined distance, the berthing parameter calculation unit 16 terminates the updating process of the berthing side straight line Ls. In that case, any distance between the remaining nearest neighbor point and the berthing side straight line Ls is smaller than the predetermined distance. For example, if measured points of wave splash or buoy are included therein, it can remove the measured points. As described above, the berthing parameter calculation unit 16 updates the berthing side straight line Ls by re-executing the principal component analysis for the neighbor point set after the exclusion of the nearest neighbor points whose distance to the berthing side straight line Ls is equal to or larger than the predetermined distance.

A supplementary description will be given of the effect of the first generation method. As other methods for obtaining the quay distance, the following first method and second method can be used. In the first method, the nearest neighbor point in every frame is extracted from each set of the point cloud data of the berthing place generated by the lidars 3 installed in the head and tail of the target ship, respectively, and the berthing side straight line Ls is obtained by generating a straight line connecting the two nearest neighbor points, and the quay distance is calculated based on the berthing side straight line Ls. Further, in the second method, the nearest neighbor point in one frame extracted from the point cloud data of the lidar 3 and the normal vector of the side surface of the berthing place are respectively calculated, and the quay distance is calculated by the inner product of the distance from the target ship to the nearest neighbor point and the normal vector. In the case of the second method, the calculation of the quay distance becomes possible even when only one lidar 3 detects the berthing place. However, when a pier with a thin side surface is a berthing place, it could occur that only the upper surface of the berthing place is detected while measured points of the side surface of the berthing place cannot be obtained. It this case, the normal vector of the side surface of the berthing place necessary in the second method cannot be obtained. Therefore, in the case where only one lidar 3 detects the berthing place and the point cloud data of the measured points on only the upper surface of the berthing place can be obtained, it is impossible to determine the quay distance according to the first method nor the second method.

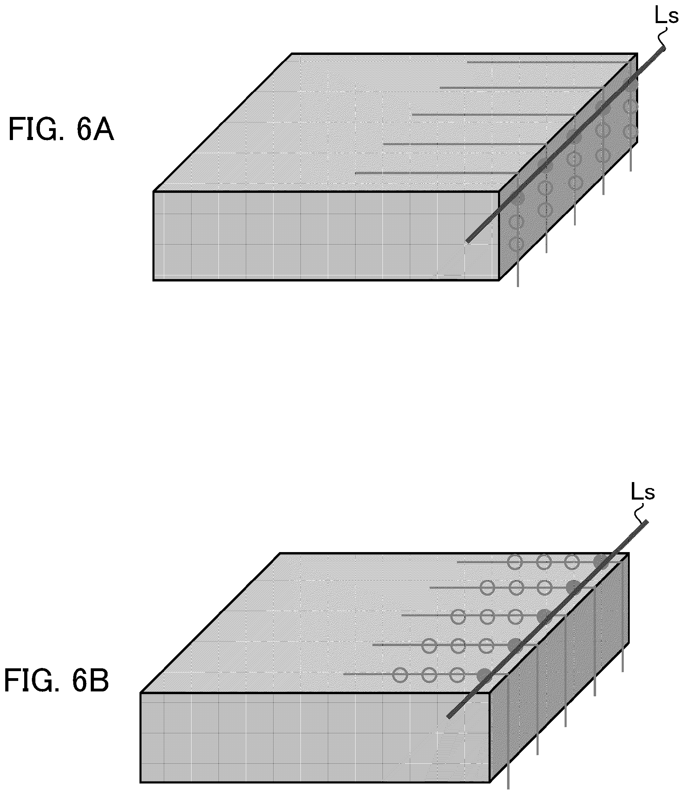

In contrast, according to the calculation method of the berthing side straight line Ls based on the first generation method, even if the obtained point cloud data represents only the measured points on the side surface of the berthing place, or only the measured points on the upper surface, the berthing parameter calculation unit 16 can suitably generate the berthing side straight line Ls. FIG. 6A shows the berthing side straight line Ls when the obtained point cloud data represents only the measured points on the side surface of the berthing place, and FIG. 6B shows the berthing side straight line Ls when the obtained point cloud data is only the measured points on the upper surface of the berthing place. As shown in FIG. 6A and FIG. 6B, in either a case where the obtained point cloud data represents only measured points on the side surface of the berthing place or a case where the obtained point cloud data represents only measured points on the upper surface, the berthing parameter calculation unit 16 can suitably generate the berthing side straight line Ls. In addition, even when only one lidar 3 detects the berthing place, the berthing parameter calculation unit 16 calculates the berthing side straight line Ls regardless of the detection availability of the normal vector of the side surface to determine the quay distance.

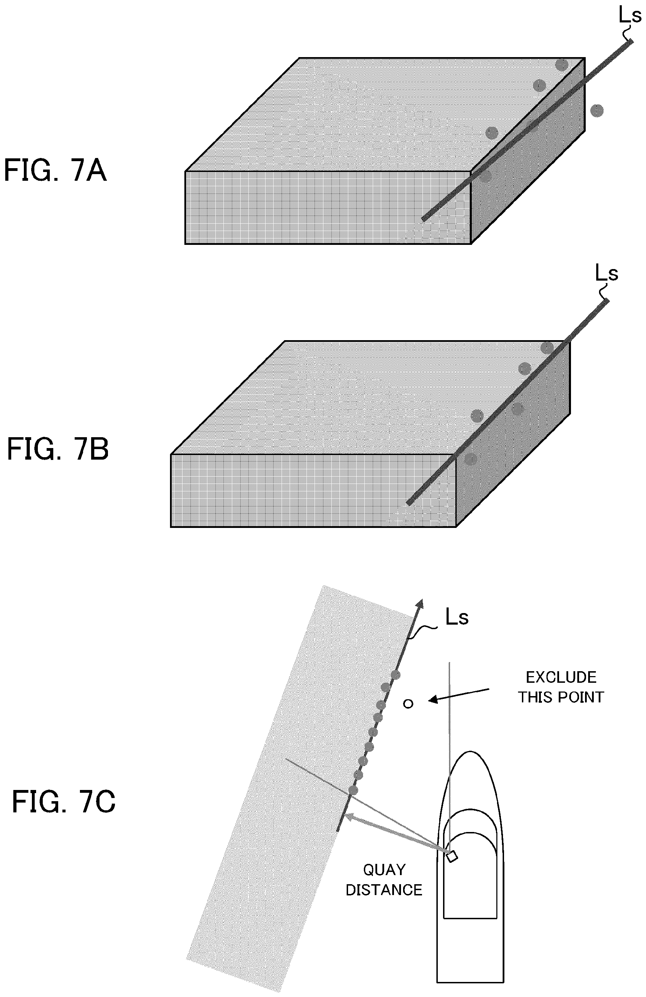

Further, the berthing parameter calculation unit 16 performs a process of updating the berthing side straight line Ls by excluding the nearest neighbor points which exist far away from the berthing side straight line Ls from the neighbor point set, on the basis of the distance between the nearest neighbor point and the berthing side straight line Ls. Thereby, it is possible to avoid the influence of the noise on the generation of the berthing side straight line Ls. FIG. 7A shows the berthing side straight line Ls before an update, and FIG. 7B shows the berthing side straight line Ls after the update. As shown in FIG. 7A and FIG. 7B, the updated berthing side straight line Ls, which was calculated by excluding the noise points, is a straight line along the side of the wharf more accurately. Consequently, by generating a perpendicular line to the berthing side straight line Ls as shown in FIG. 7C, the quay distance can be accurately determined.

Further, as a secondary effect of the first generation method, the berthing parameter calculation unit 16 compares the directional vector of the berthing side straight line Ls generated by this method with the directional vector of the straight line connecting the nearest neighbor points based on two sets of the point cloud data generated by two lidars 3 provided in the head and tail of the target ship, and determines the degree of reliability regarding the berthing side straight line Ls in accordance with the difference between the directional vectors. For example, the berthing parameter calculation unit 16 calculates the difference in each element of x, y, and z between the vectors to determine the digitized degree of reliability based on the maximum value of the difference.

(4-2) Second Generation Method

In the second generation method, the berthing parameter calculation unit 16 reads the vertical number of the nearest neighbor point for each vertical line in addition to the process according to the first generation method, and excludes the nearest neighbor point (also referred to as the "bottom-positioned neighbor point") which has the vertical number indicating the lowest point (i.e., the point corresponding to the measurement direction with the largest depression angle) from the neighbor point set. Then, the berthing parameter calculation unit 16 calculates the berthing side straight line Ls by applying the principal component analysis to the neighbor point set after exclusion of the bottom-positioned neighbor point(s).

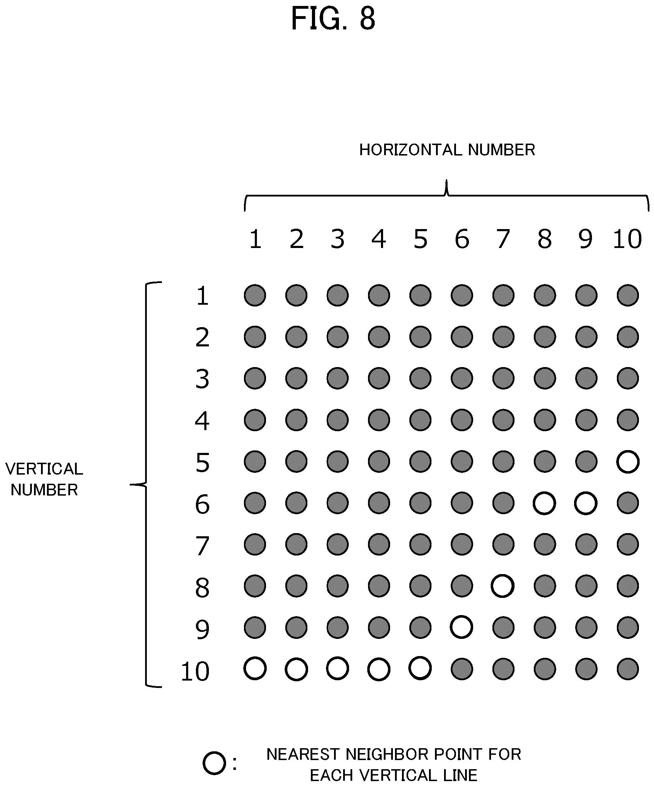

FIG. 8 is a diagram showing a frame of point cloud data on a virtual plane facing the lidar 3. Here, a single frame shall contain 10 by 10 pieces of data. In this case, the berthing parameter calculation unit 16 identifies, among the nearest neighbor points for respective vertical lines, the nearest neighbor points with the vertical number indicating the lowest point (" 10" in this case) as the bottom-positioned neighbor points, and then excludes them from the neighbor point set. Accordingly, in the example shown in FIG. 8, the berthing parameter calculation unit 16 identifies D (10, 1), D (10, 2), D (10, 3), D (10, 4), and D (10, 5) as the bottom-positioned neighbor points when each piece of data is expressed as "D (vertical number, horizontal number)" using a combination of the vertical number and the horizontal number. Then, the berthing parameter calculation unit 16 calculates the berthing side straight line Ls on the basis of D (9, 6), D (8, 7), D (6, 8), D (6, 9), and D (5, 10) other than the bottom-positioned neighbor points.

Then, the berthing parameter calculation unit 16 calculates the mean vector and the covariance matrix according to the following equations (6) and (7) on the basis of k (k is an integer of n or less) points other than the bottom-positioned neighbor points.

[Math Expression 6]

$$\boldsymbol{\mu} = \begin{bmatrix} \mu_x & \mu_y & \mu_z \end{bmatrix}^T = \begin{bmatrix} \dfrac{1}{k}\sum_{i=1}^{k} x_i & \dfrac{1}{k}\sum_{i=1}^{k} y_i & \dfrac{1}{k}\sum_{i=1}^{k} z_i \end{bmatrix}^T \quad (6)$$

$$C = \frac{1}{k-1}\sum_{i=1}^{k}\left(\begin{bmatrix} x_i - \mu_x \\ y_i - \mu_y \\ z_i - \mu_z \end{bmatrix}\begin{bmatrix} x_i - \mu_x \\ y_i - \mu_y \\ z_i - \mu_z \end{bmatrix}^T\right) = \begin{bmatrix} \sigma_x^2 & \sigma_{xy} & \sigma_{xz} \\ \sigma_{xy} & \sigma_y^2 & \sigma_{yz} \\ \sigma_{xz} & \sigma_{yz} & \sigma_z^2 \end{bmatrix} \quad (7)$$

Then, using the results obtained from the equations (6) and (7), the berthing parameter calculation unit 16 performs the principal component analysis according to the equations (3) and (4) to obtain the vector u of the first principal component axis and generate the berthing side straight line Ls from the equation (5).

Here, the effect of the second generation method will be described.

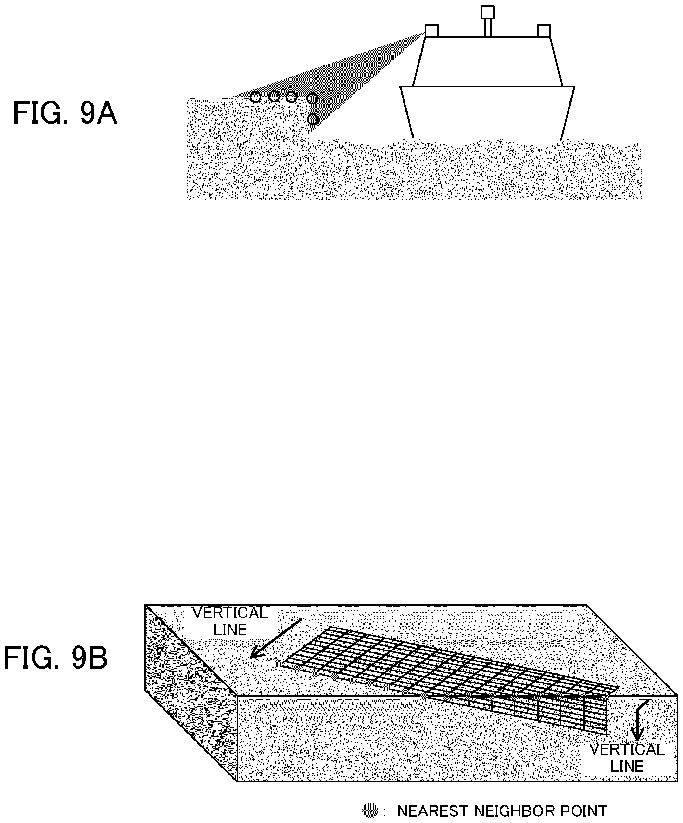

When the target ship is at a position close to the berthing place, the measurement range by the lidar 3 becomes narrow because the distance from the lidar 3 to the berthing place is short. If the side surface of the berthing place exists in the diagonal direction when viewed from the lidar 3, the measurement range includes the upper surface of the berthing place and the side surface. FIG. 9A shows a front view of the target ship when the measurement range of the lidar 3 is a range extending from the upper surface of the berthing place to the side surface.

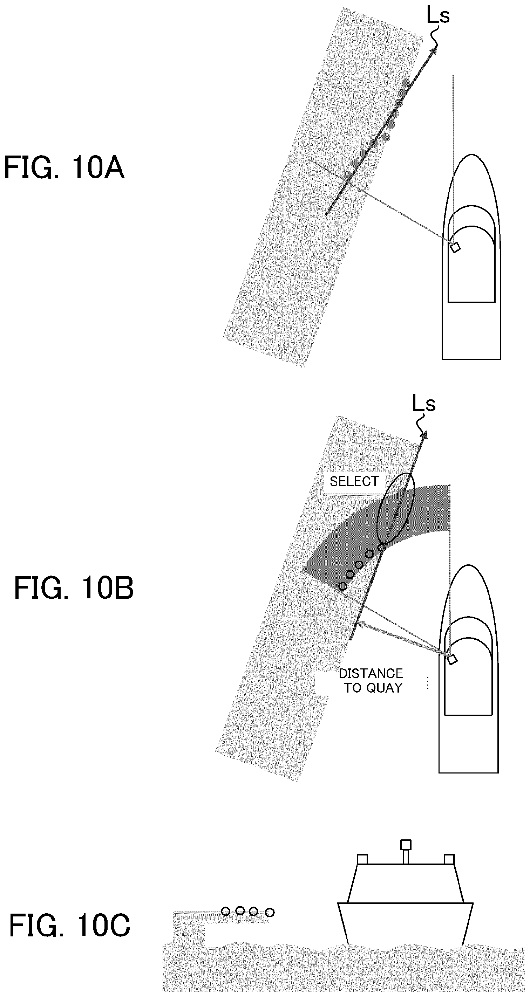

In such a situation, there are also vertical lines that do not include the edge of the berthing place. FIG. 9B is a perspective view of the berthing place clearly showing the measurement range and the nearest neighbor point for each vertical line in the case where the measurement range of the lidar 3 is a range extending from the upper surface of the berthing place to the side surface. Here, the measurement range of the lidar 3 is shown with mesh, and there is a piece of point cloud data at every intersection of the mesh. Then, in the example shown in FIG. 9B, some vertical lines on the left does not include the edge of the berthing place. Therefore, the berthing side straight line Ls, which is obtained by applying the principal component analyses to the set of nearest neighbor points for respective vertical lines, is not a straight line along the side of the berthing place. FIG. 10A shows a top view of the target ship and the berthing place where the nearest neighbor point for each vertical line and the berthing side straight line Ls generated from the points are indicated when the measurement range of the lidar 3 extends from the upper surface of the berthing place to the side surface. In this case, the calculated straight line Ls is not a straight line along the side face of the berthing place because some measured points not on the edge of the berthing place are regarded as the nearest neighbor points.

On the other hand, it is also conceivable to calculate the berthing side straight line Ls based on only the nearest neighbor points determined to be the side surface of the berthing place. However, the closer to the berthing place is, the more difficult to detect the side surface it becomes. Thus, the number of points used for calculating the berthing side straight line Ls could decrease and lead to deterioration of the calculation accuracy of the berthing side straight line Ls.

Taking the above into consideration, the berthing parameter calculation unit 16 according to the second generation method calculates the berthing side straight line Ls by excluding the bottom-positioned neighbor point(s) whose vertical number indicates the lowest point, from the neighbor point sets including the nearest neighbor points determined as the upper surface of the berthing place.

FIG. 10B shows a top view of the target ship and the berthing place clearly showing the nearest neighbor points, which are selected when the measurement range of the lidar 3 extends from the upper surface of the berthing place to the side surface, and the berthing side straight line Ls generated from these selected points. In this embodiment, the berthing parameter calculation unit 16 selects the nearest neighbor points other than the bottom-positioned neighbor points with the vertical number indicative of the lowest point, and calculate the berthing side straight line Ls based thereon. Thus, the berthing parameter calculation unit 16 can calculate the berthing side straight line Ls with high accuracy while maintaining the stability of generating the berthing side straight line Ls. Consequently, by generating a perpendicular line to the berthing side straight line Ls, it is possible to determine the quay distance accurately.

FIG. 10C shows a front view of the target ship when a pier whose side surface is almost undetectable is the berthing place. Thus, regarding such a pier that the upper surface is thin and the side surface is almost undetectable, there is no measured point to be identified as the side surface while there are only measured points identified as the upper surface. Even in such cases, according to the second generation method, since valid measured points at the edge of the pier on the upper surface can be extracted as the nearest neighbor points, it is possible to stably generate the berthing side straight line Ls even for the pier.

(4-3) Third Generation Method

In the third generation method, in addition to the process according to the first generation method, the berthing parameter calculation unit 16 reads the vertical number of the nearest neighbor point for each vertical line and sets a lower weight for a nearest neighbor point (also referred to as "top-positioned neighbor point") having the vertical number indicative of the top point (that is, the measured point corresponding to the measurement direction with the largest elevation angle for each vertical line) than the weight for the other nearest neighbor points to calculate the berthing side straight line Ls. Hereafter, the weight for each nearest neighbor point is denoted by "w". The third generation method may be executed in combination with the second generation method.

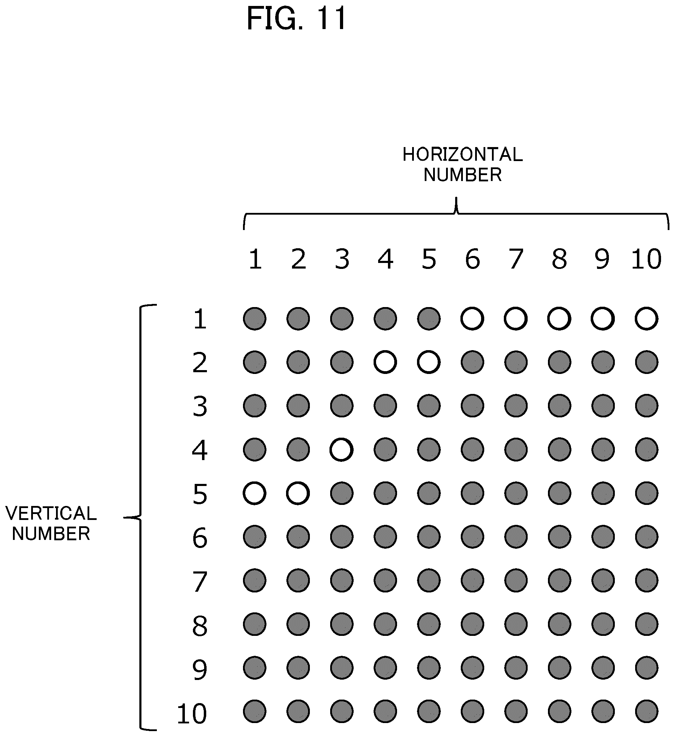

FIG. 11 is a diagram showing a frame of point cloud data on a virtual plane facing the lidar 3. Here, a single frame shall contain 10 by 10 pieces of data. In this case, the berthing parameter calculation unit 16 identifies, for each vertical line, the nearest neighbor point having a vertical number (in this case, "1") indicative of the highest point as the top-positioned neighbor point, and decreases the weight w (for example, w = 0.1) for the top-positioned neighbor point. In the example shown in FIG. 11, the berthing parameter calculation unit 16 sets each weight w for the top-positioned neighbor points D (1, 6), D (1, 7), D (1, 8), D (1, 9), and D (1, 10) to be smaller than 1. On the other hand, the berthing parameter calculation unit 16 leaves each weight w for the nearest neighbor points D (5, 1), D (5, 2), D (4, 3), D (2, 4), and D (2, 5) other than the top-positioned neighbor points as the initial value (w = 1.0).

Then, the berthing parameter calculation unit 16 calculates the berthing side straight line Ls using a weighted principal component analysis. In this case, the berthing parameter calculation unit 16 generates a weighted mean vector and a weighted covariance matrix according to the following equations (8) and (9).

[Math Expression 7]

$$\boldsymbol{\mu} = [\mu_x \quad \mu_y \quad \mu_z]^T = \left[\frac{1}{\sum_{i=1}^{n} w_i} \sum_{i=1}^{n} w_i x_i \quad \frac{1}{\sum_{i=1}^{n} w_i} \sum_{i=1}^{n} w_i y_i \quad \frac{1}{\sum_{i=1}^{n} w_i} \sum_{i=1}^{n} w_i z_i\right]^T \quad (8)$$

$$C = \frac{\sum_{i=1}^{n} w_i}{\left\{\sum_{i=1}^{n} w_i\right\}^2 - \sum_{i=1}^{n}\{w_i\}^2} \sum_{i=1}^{n} \left(w_i \begin{bmatrix} x_i - \mu_x \\ y_i - \mu_y \\ z_i - \mu_z \end{bmatrix} \begin{bmatrix} x_i - \mu_x \\ y_i - \mu_y \\ z_i - \mu_z \end{bmatrix}^T\right) = \begin{bmatrix} \sigma_x^2 & \sigma_{xy} & \sigma_{xz} \\ \sigma_{xy} & \sigma_y^2 & \sigma_{yz} \\ \sigma_{xz} & \sigma_{yz} & \sigma_z^2 \end{bmatrix} \quad (9)$$

Then, using the results obtained by the equations (8) and (9), the berthing parameter calculation unit 16 performs principal component analysis (weighted principal component analysis) according to the equations (3) and (4) thereby to obtain the vector u of the first principal component axis and generate the berthing side straight line Ls from the equation (5). In the second generation method, the same equations can also be used by setting the weights w for the bottom-positioned neighbor points in the equations (8) and (9) to 0.

Here, the effect of the third generation method will be described.

In some cases, for respective vertical lines, the measurement range of the lidar 3 only includes vertical lines, which are not across the edge, on the side surface of the berthing place. In this case, when considering a two-dimensional plane, it seems that there is no problem to generate the berthing side straight line Ls, but when the side surface of the berthing place is not flat, the nearest neighbor points of the vertical lines which are not across the edge deviate from the edge of the berthing place.

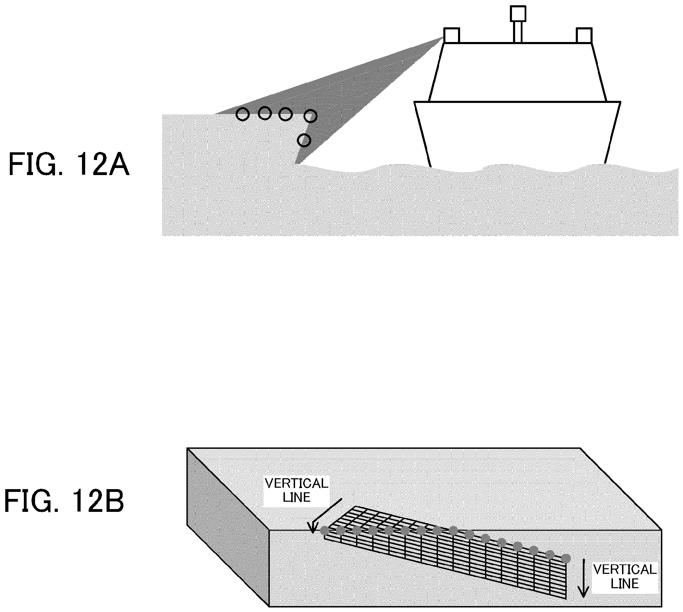

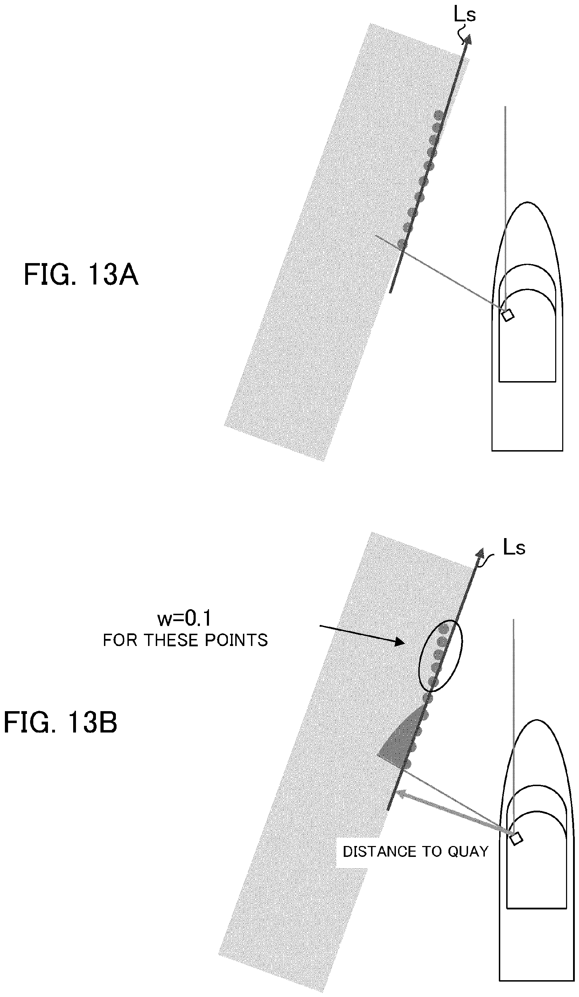

FIG. 12A shows a front view of the target ship approaching a berthing place where the side surface is inclined inward, and FIG. 12B is a perspective view of the berthing place clearly showing the measurement range of the lidar 3 and the nearest neighbor point for each vertical line when there is such a vertical line on which the measurement range of the lidar 3 only includes the side surface of the berthing place. The berthing place shown in FIG. 12A is a wharf where the side face is inclined inward. In such cases, if the berthing side straight line Ls is calculated using the nearest neighbor points corresponding to the vertical lines where only the side face of the berthing place is included in the measurement range of the lidar 3, the calculation accuracy of the berthing side straight line Ls will be decreased. FIG. 13A shows a top view of the target ship and the berthing place with a clear indication of the nearest neighbor point for each vertical line and the berthing side straight line Ls generated therefrom when there is such a vertical line on which the measurement range of the lidar 3 only includes the side surface of the berthing place. In this case, the berthing side straight line Ls does not form a straight line along the side of the berthing place because the berthing side straight line Ls was calculated using the nearest neighbor points on the side of the berthing place that is inclined inward.

In view of the above, the berthing parameter calculation unit 16 according to the third generation method calculates the berthing side straight line Ls by lowering the weight for such a nearest neighbor point whose vertical number indicates the top point. FIG. 13B shows a top view of the target ship and the berthing place with a clear indication of the nearest neighbor points with lowered weights w and the generated berthing side straight line Ls when there is such a vertical line on which the measurement range of the lidar 3 includes only the side surface of the berthing place. In this embodiment, the berthing parameter calculation unit 16 calculates the berthing side straight line Ls by setting the weights w for the top-positioned neighbor points whose vertical number indicates the top, to 0.1, respectively. Thus, the berthing parameter calculation unit 16 can calculate the berthing side straight line Ls with high accuracy while maintaining the stability of generating the berthing side straight line Ls. This allows for generating a perpendicular line to the berthing side straight line Ls to calculate the quay distance accurately.

(5) Generation of Reliability Information

Next, a specific example of generating of reliability information will be described. The reliability information generation block 40 generates flags for respective elements, such as the viewing angle at the time of detection of the berthing place, the surface detection of the berthing place, the number of normal vectors and the variance in the normal vectors, and generates a vector of the generated flags as reliability information. Hereafter, each flag shall indicate that the flag "1" represents a high degree of reliability of the corresponding element and the frag "0" represent a low degree of reliability of the corresponding element.

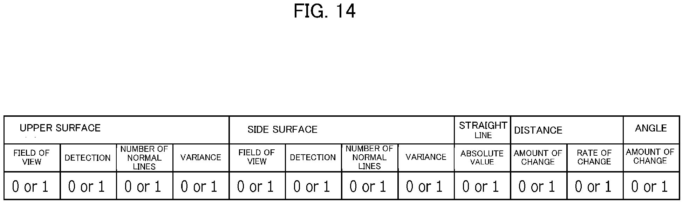

FIG. 14 shows an example of the data structure of the reliability information generated by the reliability information generation block 40. As shown in FIG. 14, the reliability information includes the following items: "upper surface", "side surface", "straight line", "distance", and "angle". In addition, the item "upper surface" includes sub-items "field of view", "detection", "number of normal lines", and "variance", while the item "side surface" includes sub-items "field of view", "detection", "number of normal lines", and "variance". In addition, the item "straight line" includes a sub-item "absolute value", the item "distance" includes a sub-item "amount of change" and "rate of change", and the item "angle" includes a sub-item "amount of change".

Here, the reliability information generation block 40 registers a flag in the sub-item "field of view" of the item "upper surface", wherein the flag is "1" if the upper surface of the berthing place is within the field of view and the flag is "0" if the upper surface is out of the field of view. In addition, the reliability information generation block 40 registers a flag in the sub item "detection" of the item "upper surface", wherein the flag is "1" if the detected surface is the upper surface of the berthing place and the flag is "0" if the detected surface is not the upper surface. Further, the reliability information generation block 40 registers a flag in the sub-item "normal vector number" of the item "upper surface", wherein the flag is "1" if the number of normal vectors with respect to the upper surface of the berthing place is equal to or more than a predetermined threshold value (for example, 10) and the flag is "0" when the number is less than the threshold value. Further, the reliability information generation block 40 registers a flag in the sub-item "variance" of the item "upper surface", wherein the flag is "1" if any of the variances in the x, y, z components of the normal vectors with respect to the upper surface of the berthing place is less than a predetermined threshold value (e.g., 1.0) and the flag is "0" if any of the variances is equal to or greater than the threshold value. The reliability information generation block 40 also registers a flag in each sub-item of the item "side surface" by the same rules as each sub-item of the item "upper surface".

In the sub-item "absolute value" of the item "straight line", the reliability information generation block 40 registers a flag representing the degree of reliability of the berthing side straight line Ls calculated by any one of the first generation method to the third generation method. For example, when the lidars 3 are provided at the head and tail of the target ship, the reliability information generation block 40 registers a flag, wherein the flag is "1" if the component-by-component differences between the directional vector of the berthing side straight line Ls calculated by any one of the first generation method to the third generation method and the directional vector of the straight line connecting the nearest neighbor points with respect to the front and rear lidars 3 of the target ship are less than a threshold value and the flag is "0" if any one of the differences is equal to or larger than the threshold value.

Further, the reliability information generation block 40 registers a flag in the sub-item "amount of change" of the item "distance", wherein the flag is "1" if the amount of change, from the immediately preceding processing time, in the quay distance calculated by the quay distance calculation block 28 is less than a predetermined threshold value (e.g., 1.0 m) and the flag is "0" if the amount of change is equal to or greater than the threshold value. Further, the reliability information generation block 40 registers a flag in the sub-item "rate of change" of the item "distance", wherein the flag is "1" if the rate of change, from the immediately preceding processing time, in the quay distance calculated by the quay distance calculation block 28 is less than a predetermined threshold value (for example, $\pm$ 10%) and the flag is "0" if the rate of change is equal to or greater than the threshold value. The reliability information generation block 40 registers a flag in the sub-item "amount of change" of the item "angle", wherein the flag is "1" if the amount of change, from the immediately preceding processing time, in the approach angle calculated by the approach angle calculation block 29 is less than a predetermined threshold value (e.g., 1.0 degrees) and the flag is "0" if the amount of change is equal to or greater than the threshold value.

It is noted that each threshold value described above is set to a fitted value previously stored in the memory 12, for example. Further, the reliability information may be generated for each lidar 3.

According to the reliability information having such a data structure, it becomes possible to grasp the degree of reliability of the calculated quay distance, berthing speed, and approach angle. It is noted that when every sub-item of the reliability information is "1", the degree of reliability is the highest. The information processing device 1 adjusts the output of the driving source in berthing based on the reliability information. For example, the information processing device 1 may determine an upper limit value of the speed of the target ship in berthing according to the total value of respective sub-items indicated by the reliability information. In this case, for example, the information processing device 1 determines that the degree of reliability of the information regarding the berthing place decreases and the necessity to care berthing the target ship increases with a decrease in the above-mentioned total value, and therefore the information processing device 1 decreases the upper limit value of the speed of the target ship in berthing with a decrease in the above-mentioned total value.

(6) Processing Flow

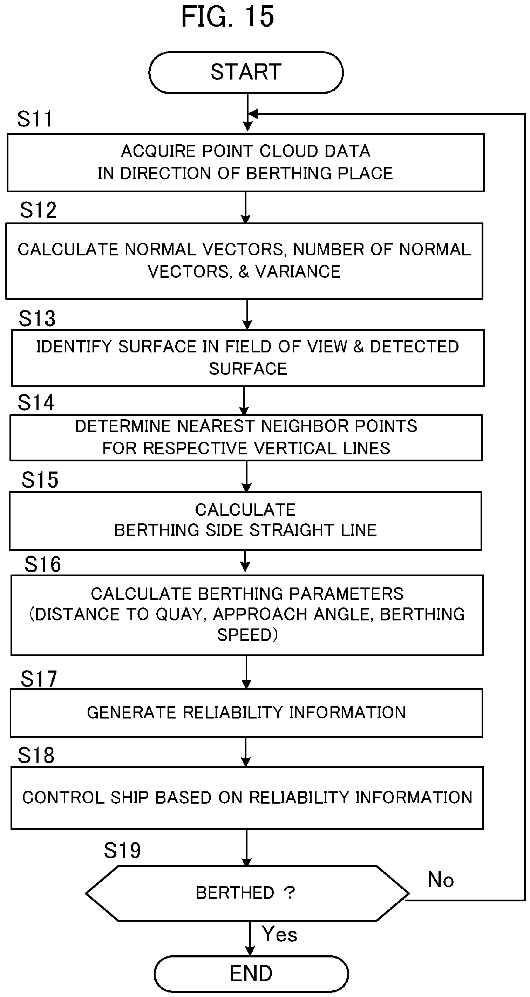

FIG. 15 is an example of a flowchart illustrating an outline of the berthing support process in the present embodiment. The information processing device 1 repeatedly executes the processing of the flowchart shown in FIG. 15.

First, the information processing device 1 acquires point cloud data in the direction of the berthing place (step S11). In this case, for example, the information processing device 1 acquires the point cloud data generated by the lidar 3 whose measurement range include the berthing side with respect to the target ship. The information processing device 1 may further perform the down-sampling of the acquired point cloud data and removal of the data obtained through reflection at the water surface.

Next, the berthing place detection unit 15 of the information processing device 1 calculates the normal vectors based on the point cloud data acquired at step S11 (step S12). Furthermore, at step S12, the berthing place detection unit 15 calculates the variance of the normal vectors and the number of the normal vectors. Further, based on the process at step S12, the berthing place detection unit 15 identifies the surface within the field of view and the detected surface (step S13).

Next, the berthing parameter calculation unit 16 performs the nearest neighbor search for each vertical line on the basis of the point cloud data acquired at step S11 and thereby obtains the nearest neighbor point for each vertical line (step S14).

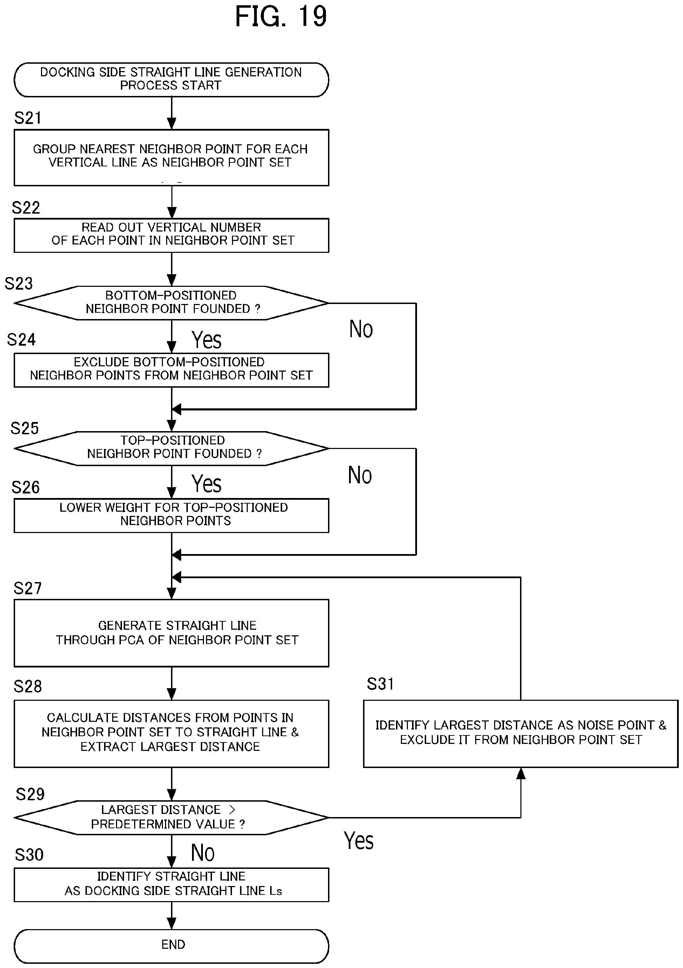

Next, the berthing parameter calculation unit 16 calculates the berthing side straight line Ls using the nearest neighbor point for each vertical line determined at step S14 (step S15). In this case, according to the first generation method, the berthing parameter calculation unit 16 may exclude any nearest neighbor point which is away from the berthing side straight line Ls and update the berthing side straight line Ls. Instead, according to the second generation method or/and the third generation method, the berthing parameter calculation unit 16 may calculate the berthing side straight line Ls after excluding the bottom-positioned neighbor point(s) and/or the top-positioned neighbor point(s) or reducing the weight for them. The detail of the process at step S15 will be described later with reference to FIG. 19.

Next, the berthing parameter calculation unit 16 calculates the quay distance, the approach angle, and the berthing speed, which are berthing parameters, using the berthing side straight line Ls calculated at step S15 (step S16).

Then, the berthing parameter calculation unit 16 generates reliability information on the basis of the identification result regarding the surface in the field of view and the detected surface at step S13 and the calculation result of the berthing parameters at step S16 (step S17). Thereafter, the information processing device 1 performs control of the ship based on the reliability information (step S18). Thus, the information processing device 1 can accurately perform the control of the ship relating to the berthing on the basis of the degree of reliability accurately representing the berthing status.

Then, the information processing device 1 determines whether or not the target ship has been berthed (has reached the quay) (step S19). In this case, for example, based on the output signal from the sensor group 2 or a user input via the interface 11, the information processing device 1 determines whether or not the target ship has been berthed. Then, upon determining that the target ship has been berthed (step S19; Yes), the information processing device 1 terminates the process of the flowchart. On the other hand, upon determining that the target ship has not been berthed (step S19; No), the information processing device 1 proceeds back to the process at step S11.

FIG. 19 is an example of the flowchart relating to a process of calculating the berthing side straight line Ls at step S15 in FIG. 15.

First, the berthing parameter calculation unit 16 groups the nearest neighbor points for respective vertical lines as a neighbor point set (step S21). Then, the berthing parameter calculation unit 16 reads the vertical number of each point of the neighbor point set (step S22).

Next, the berthing parameter calculation unit 16 determines whether or not there is any bottom-positioned neighbor point in the neighbor point set (step S23). When there is any bottom-positioned neighbor point (step S23; Yes), the berthing parameter calculation unit 16 excludes the bottom-positioned neighbor point(s) from the neighbor point set (step S24). On the other hand, when there is no bottom-positioned neighbor point (step S23; No), the berthing parameter calculation unit 16 proceeds to the process at step S25.

Next, the berthing parameter calculation unit 16 determines whether or not there is a top-positioned neighbor point in the neighbor point set (step S25). Then, if there is a top-positioned neighbor point (step S25; Yes), the berthing parameter calculation unit 16 sets the weight for the top-positioned neighbor point(s) to be lower than the weight for any other nearest neighbor points (step S26). On the other hand, if there is no top-positioned neighbor point (step S25; No), the berthing parameter calculation unit 16 proceeds to the process at step S27.

Then, the berthing parameter calculation unit 16 generates a straight line through the principal component analysis for the neighbor point set (step S27). Then, the berthing parameter calculation unit 16 calculates the distance from the respective points of the neighbor point set to the above-described straight line and extracts the largest distance among them (step S28). Then, the berthing parameter calculation unit 16 determines whether the largest distance is longer than a predetermined value (step S29). If the largest distance is longer than the predetermined value (step S29; Yes), the berthing parameter calculation unit 16 determines that the point of the neighbor point set corresponding to the largest distance is a noise point and excludes the point from the neighbor point set (step S31). Then, the berthing parameter calculation unit 16 proceeds to the process at S27.

On the other hand, if the largest distance is equal to or less than the predetermined value (step S29; No), the berthing parameter calculation unit 16 identifies the straight line calculated at step S27 as the berthing side straight line Ls (step S30).

(7) Modifications

(First Modification)

Instead of calculating the berthing side straight line Ls from the neighbor point set that is a set of nearest neighbor points for respective vertical lines on the basis of the principal component analysis, the berthing straight line calculation unit 16 may calculate the berthing side straight line Ls from the neighbor point set based on a regression analysis method such as the least squares method. Even in this case, the berthing parameter calculation unit 16 can accurately compute the berthing side straight line Ls on the basis of the nearest neighbor points for respective vertical lines.

(Second Modification)

The information processing device 1 may identify the the hull part (closest part) closest to the quay and the shortest distance between the closest part and the quay to use them for berthing or leaving operation.

In this case, the information processing device 1 determines the above-described closest part and the shortest distance by the following (Step 1) to (Step 3).

(Step 1) Calculate the distance from several points (also referred to as "contour points Po") representing the contour of the ship to the berthing side straight line Ls.

(Step 2) Extract the minimum value from distances from the calculated contour points Po to the berthing straight line Ls.

(Step 3) Identify the minimum value as the shortest quay distance while identifying the contour point Po corresponding to the minimum value as the closest part to the quay.

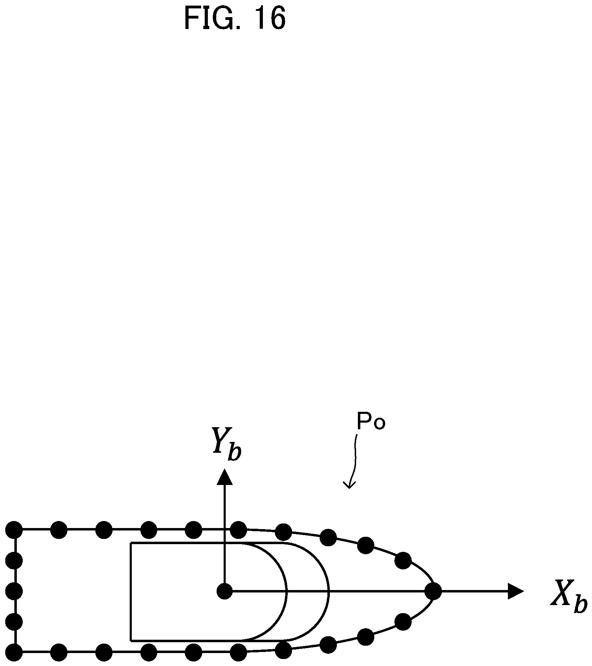

FIG. 16 is a bird's-eye view of a target ship with a clear indication of the contour points Po. For example, contour data, which is position data indicating the contour positions of the target ship, is stored in the memory 12. The contour data is data having records of a plurality of contour points Po (24 points in this case) representing the contour of the target ship as the coordinates of the ship coordinate system. Here, the front (forward) direction of the target ship corresponds to the "$X_b$" coordinate, the side direction of the target ship corresponds to the "$Y_b$" coordinate, and the vertical direction of the target ship corresponds to the "$Z_b$" coordinate. Then, the measurement data, measured by the lidar 3, in the coordinate system with respect to the lidar 3 is converted into data in the ship coordinate system. It is noted that the process of converting the point cloud data in the coordinate system with respect to the lidar installed in the moving body to data in the coordinate system of the moving body, for example, is disclosed in the PCT International Publication WO2019/188745.

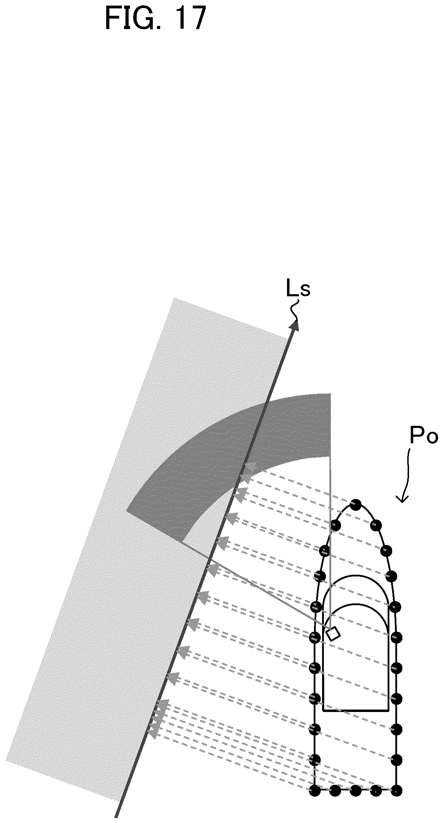

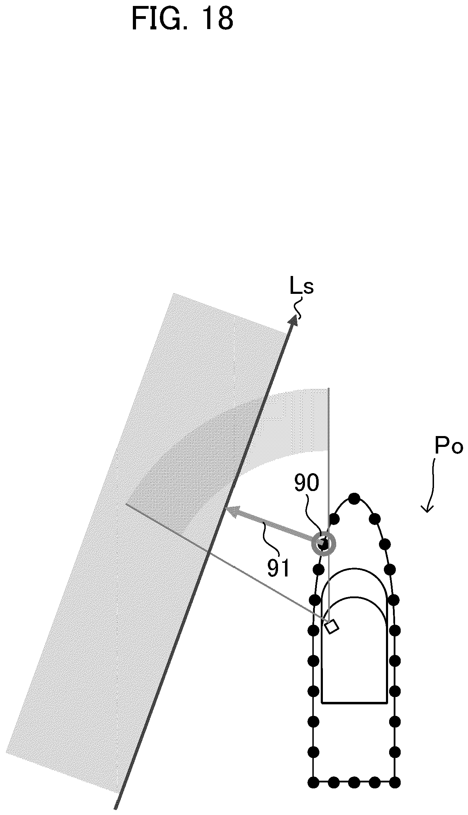

FIG. 17 is a view clearly showing the distances from the contour points Po to the berthing side straight line Ls by arrows. Calculation of these distances carried out by determining the length of the perpendicular line from each contour point Po to the berthing side straight line Ls, in the same way as described above. Here, arrows indicating the above-mentioned distances for 24 contour points Po are explicitly shown. FIG. 18 is a diagram illustrating the closest part and the shortest distance. Here, the contour point Po corresponding to the shortest distance extracted at (Step 2) is highlighted by the circle 90 as the closest part, and the shortest distance from the closest part to the wharf is indicated by an arrow 91.

Therefore, the second modification allows for grasping the distance between the ship portion closest to the target wharf and the target wharf to contribute to the safer and smoother operation support of the ship.

(Third Modification)

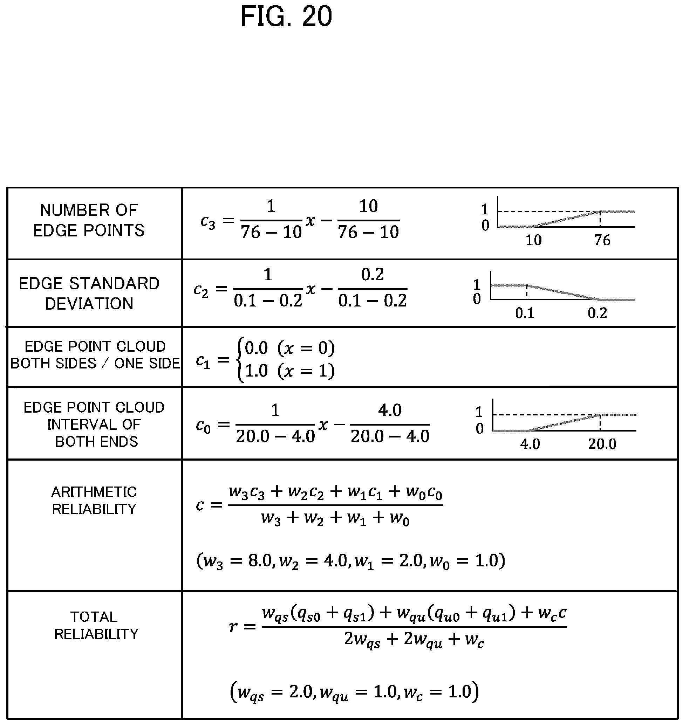

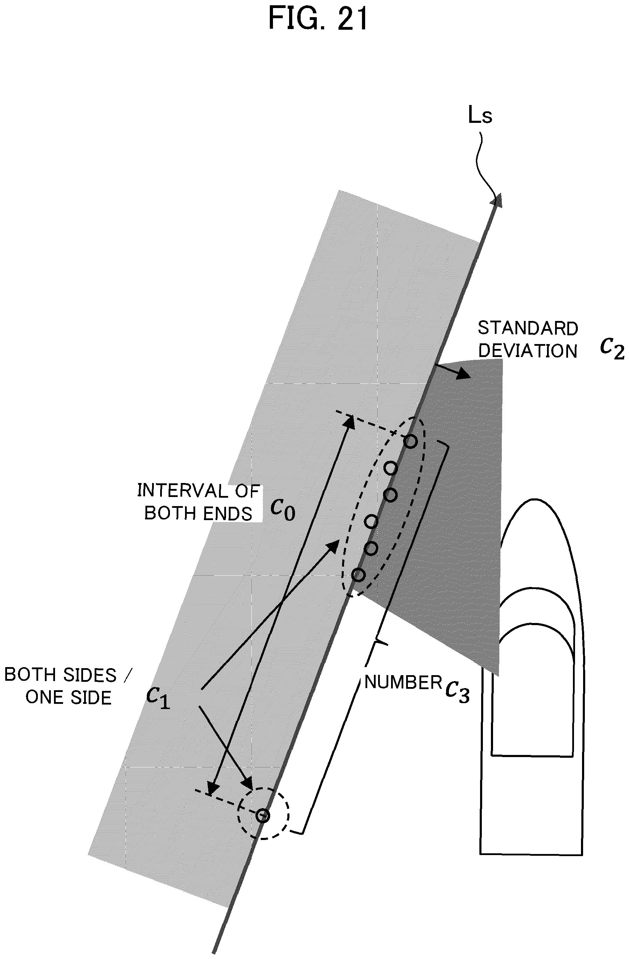

FIG. 20 shows the indicators and the degree of reliability included in the reliability information according to the modification. FIG. 21 is a bird's-eye view of the target ship and berthing place clearly showing the indicators shown in FIG. 20. Here, the measured points on or around the edge of the berthing place is also referred to as "target points".

The indicator "$c_3$" is an indicator based on the number of target points. Here, as an example, the indicator is represented as a linear function having the variable x which denotes the number of the target points. The indicator "$c_2$" is an indicator based on the standard deviation of the target points. Here, as an example, the indicator is represented as a linear function having the variable x which denotes the standard deviation of the target points. The indicator "$c_1$" is an indicator indicating whether or not the front side and rear side of wharf could be measured by two lidars 3, and here, as an example, the indicator is set to "1.0" when both sides were measured and is set to "0.0" when only one side was measured. The indicator "$c_0$" is an indicator based on the interval of both ends of the sequence of the target points (both ends along the berthing side straight line Ls), and it is represented as a linear function having the variable x which denotes the above-mentioned interval of the both ends. The indicators $c_0$ to $c_3$ are also normalized to range from 0 to 1.

The arithmetic reliability "c" is a degree of reliability based on the indicators $c_0$ to $c_3$ described above, and is herein a weighted mean value of the indicators $c_0$ to $c_3$ using the weight coefficients "$w_0$" to "$w_3$" according to the degrees of importance of the indicators $c_0$ to $c_3$. An exemplary setting of the weight coefficients $w_0$ to $w_3$ is shown. Since each indicator $c_0$ to $c_3$ ranges from 0 to 1, the arithmetic reliability c, which is the weighted mean of them, is also calculated as a numerical value in the range from 0 to 1.

The total reliability "r" is a degree of reliability based on a side surface detection reliability "$q_s$", a top detection reliability "$q_u$", and the arithmetic reliability c, wherein the side surface detection reliability $q_s$ is a degree of reliability regarding detection of the side surface of the wharf and the top detection reliability $q_u$ is a reliability regarding detection of the upper surface of the wharf. The total reliability herein is a weighted mean value of the reliability $q_s$, $q_u$, and c using the weight coefficients "$w_{qs}$", "$w_{qu}$", "$w_c$" according to the degrees of importance of the reliability $q_s$, $q_u$, c. Further, an exemplary setting of the weight coefficients $w_{qs}$, $w_{qu}$, $w_c$ is shown. In some embodiments, for example, the information processing device 1 may calculate the side surface detection reliability $q_s$ based on the item "side surface" of the reliability information illustrated in FIG. 14, and calculate the upper surface detection reliability $q_u$ based on the item "upper surface" of the reliability information in the same figure. Then, both the side surface detection reliability $q_s$ and the upper surface detection reliability $q_u$ are calculated to range from 0 to 1. In addition, when both the front and rear of the wharf are detected, the side surface detection reliability $q_{s0}$ of the front wharf, the side surface detection reliability $q_{s1}$ of the rear wharf, the upper surface detection reliability $q_{u0}$ of the front wharf, and the upper surface detection reliability $q_{u1}$ of the rear wharf are calculated, respectively. Since both the side surface detection reliability $q_s$ and the upper surface detection reliability $q_u$ and the arithmetic reliability c are in the range from 0 to 1, the total reliability r, which is the weighted mean of them, is also calculated as a numerical value in the range from 0 to 1. Therefore, it can be seen that the closer the total reliability r is to 1, the higher the degree of reliability of the calculated berthing parameters becomes, whereas the closer the total reliability r is to 0, the lower the degree of reliability of the calculated berthing parameters becomes.

The reliability information including each indicator and degree of reliability according to the modification suitably enables the information processing device 1 to perform such adjustment of the output of the driving source in berthing.

As described above, the controller 13 of the information processing device 1 functions as an acquisition unit, an extraction unit, and a calculation unit. The acquisition unit is configured to acquire point cloud data which is a set of data generated by a lidar 3 provided in a target ship, the data being identified by a pair of a horizontal number, which is an index representing a position in a horizontal direction, and a vertical number, which is an index representing a position in a vertical direction. The extraction unit is configured to extract, for each horizontal number (i.e., for each vertical line), the data representing a nearest neighbor point nearest to the target ship among data representing measured points of a berthing place. The calculation unit is configured to calculate a berthing side straight line Ls, which is a straight line along the berthing place, based on a neighbor point set, which is a set of data representing the nearest neighbor point. According to this aspect, the controller 13 can accurately calculate the berthing parameters such as the quay distance.

In the embodiments described above, the program is stored by any type of a non-transitory computer-readable medium (non-transitory computer readable medium) and can be supplied to a control unit or the like that is a computer. The non-transitory computer-readable medium include any type of a tangible storage medium. Examples of the non-transitory computer readable medium include a magnetic storage medium (e.g., a flexible disk, a magnetic tape, a hard disk drive), a magnetic-optical storage medium (e.g., a magnetic optical disk), CD-ROM (Read Only Memory), CD-R, CD-R/W, a solid-state memory (e.g., a mask ROM, a PROM (Programmable ROM), an EPROM (Erasable PROM), a flash ROM, a RAM (Random Access Memory)).

While the present invention has been described with reference to the embodiments, the present invention is not limited to the above embodiments. Various modifications that can be understood by a person skilled in the art can be made to the configuration and details of the present invention within the scope of the present invention. Namely, the present invention includes, of course, various modifications that may be made by a person skilled in the art according to the entire disclosure including claims and technical ideas. In addition, all Patent and Non-Patent Literatures mentioned in this specification are incorporated by reference in its entirety.

DESCRIPTION OF REFERENCE NUMERALS

1    Information processing device
2    Sensor group
3    Lidar

**Claims**

**1.** An information processing device comprising:

an acquisition unit configured to acquire measurement data which is a set of data generated by a measurement device provided in a ship, the data being identified by a pair of an index representing a position in a horizontal direction and an index representing a position in a vertical direction;

an extraction unit configured to extract, for each index representing the position in the horizontal direction, the data representing a nearest neighbor point nearest to the ship among the data representing measured points of a berthing place; and

a straight line calculation unit configured to calculate a straight line along the berthing place, based on a neighbor point set which is a set of the data representing the nearest neighbor point.

2. The information processing device according to claim 1,
wherein the straight line calculation unit is configured to update the straight line, based on the neighbor point set after exclusion of the nearest neighbor point which is far in terms of distance from the straight line by a predetermined distance or more.

3. The information processing device according to claim 1 or 2,
wherein the straight line calculation unit is configured to calculate the straight line, based on the neighbor point set after exclusion of the data corresponding to the index having a largest depression angle of a measurement direction of the measurement device among indices which represent the positions in the vertical direction.

4. The information processing device according to any one of claims 1 to 3,
wherein the straight line calculation unit is configured to calculate the straight line while setting a lower weight for the data of the neighbor point set corresponding to the index, which has a largest elevation angle of a measurement direction of the measurement device among indices which represent the positions in the vertical direction, than a weight for the other data in the neighbor point set.

5. The information processing device according to any one of claims 1 to 4, further comprising
a quay distance calculation unit configured to calculate a quay distance which is a distance between the ship and the berthing place, based on a length of a perpendicular line from the measurement device to the straight line.

6. The information processing device according to any one of claims 1 to 5, further comprising:

   a shortest quay distance calculation unit configured to

      extract a contour point, which has a shortest length of a perpendicular line from the contour point to the straight line, among contour points of the ship and
      calculate a shortest distance from a hull of the ship to the berthing place; and

   a proximate portion identification unit configured to identify a part of the ship closest to the berthing place.

7. The information processing device according to any one of claims 1 to 6,

   wherein the acquisition unit is configured to acquire, as the measurement data, data obtained by applying at least one of

      removal of water surface reflection data and/or
      reduction of a data point number by down-sampling
      to data generated by the measurement device,

   the water surface reflection data being generated through reflection of light emitted by the measurement device at a water surface.

8. A control method executed by a computer, the control method comprising:

   acquiring measurement data which is a set of data generated by a measurement device provided in a ship, the data being identified by a pair of an index representing a position in a horizontal direction and an index representing a position in a vertical direction;
   extracting, for each index representing the position in the horizontal direction, the data representing a nearest neighbor point nearest to the ship among the data representing measured points of a berthing place; and
   calculating a straight line along the berthing place, based on a neighbor point set which is a set of the data representing the nearest neighbor point.

**9.** A program causing a computer to:

acquire measurement data which is a set of data generated by a measurement device provided in a ship, the data being identified by a pair of an index representing a position in a horizontal direction and an index representing a position in a vertical direction;

extract, for each index representing the position in the horizontal direction, the data representing a nearest neighbor point nearest to the ship among the data representing measured points of a berthing place; and

calculate a straight line along the berthing place, based on a neighbor point set which is a set of the data representing the nearest neighbor point.

**10.** A storage medium storing the program according to claim 9.

EP 4 494 999 A1

FIG. 1A

1

INFORMATION
PROCESSING
DEVICE

2

SENSOR GROUP

LIDAR

3

⋮

FIG. 1B

90

90

3

FIG. 1C

90

3

21

# FIG. 2

FIG. 3

BERTHING PLACE
DETECTION UNIT                    15

POINT
CLOUD
DATA

NORMAL VECTOR
CALCULATION
20

FIELD-OF-VIEW
/DETECTED
SURFACE
IDENTIFICATION        21

NORMAL VECTOR
NUMBER
IDENTIFICATION        22

MEAN /VARIANCE
CALCULATION           23

BERTHING
STATUS
DETERMINATION         24

16                                      40

RELIABILITY
INFORMATION
GENERATION

APPROACH
ANGLE
CALCULATION           29

NEIGHBORING
POINT SERCH           26

BERTHING
PARAMETER
CALCULATION UNIT

STRAIGHT LINE
GENERATION            27

QUAY DISTANCE
CALCULATION           28

BERTHING SPEED
CALCULATION           30

FIG. 4A

FIG. 4B

FIG. 4C

FIG. 5A

VERTICAL
LINE

⬤ NEAREST NEIGHBOR POINT

FIG. 5B

Ls

NEIGHBOR POINT
SET

FIG. 6A

Ls

FIG. 6B

Ls

FIG. 7A

Ls

FIG. 7B

Ls

FIG. 7C

Ls

EXCLUDE
THIS POINT

QUAY
DISTANCE

# FIG. 8

O : NEAREST NEIGHBOR POINT FOR
EACH VERTICAL LINE

FIG. 9A

FIG. 9B

VERTICAL
LINE

VERTICAL
LINE

● : NEAREST NEIGHBOR POINT

FIG. 10A

Ls

FIG. 10B

Ls

SELECT

DISTANCE
TO QUAY

FIG. 10C

# FIG. 11

FIG. 12A

FIG. 12B

VERTICAL LINE

VERTICAL LINE

Ls

FIG. 13A

Ls

w=0.1
FOR THESE POINTS

FIG. 13B

DISTANCE TO QUAY

FIG. 14

| UPPER SURFACE | | | | SIDE SURFACE | | | | STRAIGHT LINE | DISTANCE | | | ANGLE |
|---|---|---|---|---|---|---|---|---|---|---|---|---|
| FIELD OF VIEW | DETECTION | NUMBER OF NORMAL LINES | VARIANCE | FIELD OF VIEW | DETECTION | NUMBER OF NORMAL LINES | VARIANCE | ABSOLUTE VALUE | AMOUNT OF CHANGE | RATE OF CHANGE | AMOUNT OF CHANGE |
| 0 or 1 | 0 or 1 | 0 or 1 | 0 or 1 | 0 or 1 | 0 or 1 | 0 or 1 | 0 or 1 | 0 or 1 | 0 or 1 | 0 or 1 | 0 or 1 |

# FIG. 15

START

**S11**
ACQUIRE POINT CLOUD DATA
IN DIRECTION OF BERTHING PLACE

**S12**
CALCULATE NORMAL VECTORS, NUMBER OF NORMAL
VECTORS, & VARIANCE

**S13**
IDENTIFY SURFACE IN FIELD OF VIEW & DETECTED
SURFACE

**S14**
DETERMINE NEAREST NEIGHBOR POINTS
FOR RESPECTIVE VERTICAL LINES

**S15**
CALCULATE
BERTHING SIDE STRAIGHT LINE

**S16**
CALCULATE BERTHING PARAMETERS
(DISTANCE TO QUAY, APPROACH ANGLE, BERTHING
SPEED)

**S17**
GENERATE RELIABILITY INFORMATION

**S18**
CONTROL SHIP BASED ON RELIABILITY INFORMATION

**S19**
BERTHED ? — No

Yes

END

# FIG. 16

# FIG. 17

# FIG. 18

# FIG. 19

DOCKING SIDE STRAIGHT LINE GENERATION
PROCESS START

S21

GROUP NEAREST NEIGHBOR POINT FOR EACH
VERTICAL LINE AS NEIGHBOR POINT SET

S22

READ OUT VERTICAL NUMBER
OF EACH POINT IN NEIGHBOR POINT SET

S23

BOTTOM-POSITIONED
NEIGHBOR POINT FOUNDED ?

No

Yes

S24

EXCLUDE BOTTOM-POSITIONED
NEIGHBOR POINTS FROM NEIGHBOR POINT SET

S25

TOP-POSITIONED
NEIGHBOR POINT FOUNDED ?

No

Yes

S26

LOWER WEIGHT FOR TOP-POSITIONED
NEIGHBOR POINTS

S27

GENERATE STRAIGHT LINE
THROUGH PCA OF NEIGHBOR POINT SET

S31

IDENTIFY LARGEST DISTANCE AS NOISE POINT &
EXCLUDE IT FROM NEIGHBOR POINT SET

S28

CALCULATE DISTANCES FROM POINTS IN
NEIGHBOR POINT SET TO STRAIGHT LINE &
EXTRACT LARGEST DISTANCE

S29

LARGEST DISTANCE >
PREDETERMINED VALUE ?

Yes

No

S30

IDENTIFY STRAIGHT LINE
AS DOCKING SIDE STRAIGHT LINE Ls

END

# FIG. 20

| | | |
|---|---|---|
| NUMBER OF EDGE POINTS | $c_3 = \dfrac{1}{76-10}x - \dfrac{10}{76-10}$ | |
| EDGE STANDARD DEVIATION | $c_2 = \dfrac{1}{0.1-0.2}x - \dfrac{0.2}{0.1-0.2}$ | |
| EDGE POINT CLOUD BOTH SIDES / ONE SIDE | $c_1 = \begin{cases} 0.0 & (x=0) \\ 1.0 & (x=1) \end{cases}$ | |
| EDGE POINT CLOUD INTERVAL OF BOTH ENDS | $c_0 = \dfrac{1}{20.0-4.0}x - \dfrac{4.0}{20.0-4.0}$ | |
| ARITHMETIC RELIABILITY | $c = \dfrac{w_3 c_3 + w_2 c_2 + w_1 c_1 + w_0 c_0}{w_3 + w_2 + w_1 + w_0}$ <br><br> $(w_3 = 8.0, w_2 = 4.0, w_1 = 2.0, w_0 = 1.0)$ | |
| TOTAL RELIABILITY | $r = \dfrac{w_{qs}(q_{s0} + q_{s1}) + w_{qu}(q_{u0} + q_{u1}) + w_c c}{2w_{qs} + 2w_{qu} + w_c}$ <br><br> $\left(w_{qs} = 2.0, w_{qu} = 1.0, w_c = 1.0\right)$ | |

# FIG. 21

Ls

STANDARD DEVIATION $c_2$

INTERVAL OF BOTH ENDS $c_0$

BOTH SIDES / ONE SIDE $c_1$

NUMBER $c_3$

## INTERNATIONAL SEARCH REPORT

| | International application No. |
|---|---|
| | **PCT/JP2023/008958** |

**A.    CLASSIFICATION OF SUBJECT MATTER**

*B63H 25/04*(2006.01)i; *B63B 49/00*(2006.01)i; *B63B 79/10*(2020.01)i; *B63B 79/40*(2020.01)i; *B63H 25/00*(2006.01)i; *G01S 17/93*(2020.01)i

FI:    B63H25/04 D; G01S17/93; B63H25/00 Z; B63B79/40; B63B79/10; B63B49/00 Z; B63H25/04 G

According to International Patent Classification (IPC) or to both national classification and IPC

**B.    FIELDS SEARCHED**

Minimum documentation searched (classification system followed by classification symbols)

B63H25/04; B63B49/00; B63B79/10; B63B79/40; B63H25/00; G01S17/93

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2007-106397 A (YAMAHA MOTOR CO., LTD.) 26 April 2007 (2007-04-26)<br>entire text, all drawings | 1-10 |
| A | JP 2021-71800 A (YANMAR POWER TECHNOLOGY CO., LTD.) 06 May 2021 (2021-05-06)<br>entire text, all drawings | 1-10 |
| A | 平山拓央，森英男，三菱造船の無人運航船プロジェクトについて ー MEGURI2040 無人運航実証実験プロジェクト ー,日本船舶海洋工学会誌 KANRIN（咸臨）, January 2022, no. 100, pp. 12-15, DOI: 10.14856/kanrin.100.0_12, ISSN 2424-161X (online), 1880-3725 (print)<br>entire text, all drawings, (HIRAYAMA, Takuo. MORI, Hideo. Bulletin of The Japan Society of Naval Architects and Ocean Engineers: KANRIN.), non-official translation (About Mitsubishi Shipbuilding's unmanned ship operation projects -MEGURI 2040 Unmanned ship demonstration test project-) | 1-10 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2023/008958** |

### C. DOCUMENTS CONSIDERED TO BE RELEVANT

| Category* | Citation of document, with indication, where appropriate, of the relevant passages | Relevant to claim No. |
| --- | --- | --- |
| A | 中原匡哉，中村健二，田中成典，寺口敏生，関谷浩孝, 点群データを用いたブロック工の設計要素抽出に関する研究, 情報処理学会論文集, March 2019, vol. 60, no. 3, pp. 903-915<br>entire text, all charts, (NAKAHARA, Masaya. NAKAMURA, Kenji. TANAKA, Shigenori. TERAGUCHI, Toshio. SEKIYA, Hirotaka. Research for Extracting Design Elements of Block Construction Work Using Point Cloud Data.), non-official translation (Proceedings of Information Processing Society of Japan) | 1-10 |
| A | 杉原厚吉, 頂点辞書を利用した距離画像解析, 情報処理学会論文誌, January 1979, vol. 20, no. 1, pp. 39-44<br>entire text, all drawings, (SUGIHARA, Kokichi. Distance image analysis using vertex dictionary.) | 1-10 |
| A | JP 2004-175187 A (NATIONAL MARITIME RESEARCH INSTITUTE) 24 June 2004 (2004-06-24)<br>entire text, all drawings | 1-10 |
| P, A | JP 2022-137867 A (PIONEER CORP.) 22 September 2022 (2022-09-22)<br>entire text, all drawings | 1-10 |
| P, A | JP 2022-139982 A (PIONEER CORP.) 26 September 2022 (2022-09-26)<br>entire text, all drawings | 1-10 |
| P, A | JP 2022-139986 A (PIONEER CORP.) 26 September 2022 (2022-09-26)<br>entire text, all drawings | 1-10 |

Form PCT/ISA/210 (second sheet) (January 2015)

<div style="text-align:center">

**INTERNATIONAL SEARCH REPORT**
Information on patent family members

</div>

International application No.

**PCT/JP2023/008958**

| Patent document cited in search report | | | Publication date (day/month/year) | Patent family member(s) | | | Publication date (day/month/year) |
|---|---|---|---|---|---|---|---|
| JP | 2007-106397 | A | 26 April 2007 | US | 2007/0073454 | A1 | |
| JP | 2021-71800 | A | 06 May 2021 | WO | 2021/085274 | A1 | |
| | | | | EP | 4053822 | A1 | |
| JP | 2004-175187 | A | 24 June 2004 | (Family: none) | | | |
| JP | 2022-137867 | A | 22 September 2022 | (Family: none) | | | |
| JP | 2022-139982 | A | 26 September 2022 | (Family: none) | | | |
| JP | 2022-139986 | A | 26 September 2022 | (Family: none) | | | |

Form PCT/ISA/210 (patent family annex) (January 2015)

**REFERENCES CITED IN THE DESCRIPTION**

**Patent documents cited in the description**

- JP 2020059403 A

- WO 2019188745 A